# EUROPÄISCHE PATENTSCHRIFT

(11) **EP 2 980 526 B1**
(45) Veröffentlichungstag und Bekanntmachung des Hinweises auf die Patenterteilung: **16.01.2019**
(21) Anmeldenummer: 14179139.2
(22) Anmeldetag: 30.07.2014
(51) Int. Cl.: G01B 21/04

(54) **Koordinatenmessgerät und Verfahren zum Messen von Koordinaten**
Coordinate measuring device and method
Appareil et méthode de mesure de coordonnées

(43) Veröffentlichungstag der Anmeldung: 03.02.2016
(73) Patentinhaber: Leica Geosystems AG, 9435 Heerbrugg (CH)
(72) Erfinder: Böckem, Burkhard, CH-5415 Rieden (CH); Moser, Daniel, CH-5707 Seengen (CH); Fuchs, Simon, CH-5040 Schöftland (CH)
(74) Vertreter: Kaminski Harmann

(56) Entgegenhaltungen:
- EP-A1- 2 698 602
- EP-A1- 2 746 807
- WO-A1-2013/114466
- US-A1- 2008 235 970

## Beschreibung

Die Erfindung bezieht sich auf Koordinatenmessgeräte, insbesondere ausgestaltet als Lasertracker, zur Vermessung von Koordinaten auf Oberflächen von Zielobjekten. Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden (siehe z.B. EP 2 746 807 A1). Ein
Zielpunkt kann dabei durch eine retro-reflektierende Einheit (z. B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung oder mittels des Fizeau-Prinzips ermittelt.

Lasertracker nach dem Stand der Technik können zusätzlich mit einer optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z. B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines sogenannten Messhilfsinstruments mit Markierungen, deren relative Lage zueinander bekannt ist, kann auf eine Orientierung eines an dem Messhilfsinstrument angeordneten Objekts (z. B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Das Objekt, dessen Position und Orientierung mit dem genannten Messgerät vermessen wird, muss damit beispielsweise nicht eine Messsonde selbst sondern kann das Messhilfsmittel sein. Dieses wird als Teil des Messsystems für die Vermessung in eine relativ zum Zielobjekt mechanisch definierte oder während der Vermessung bestimmbare Position gebracht, wobei über dessen vermessene Position und Orientierung auf die Position und gegebenenfalls die Orientierung beispielsweise der Messsonde geschlossen werden kann.

Derartige Messhilfsinstrumente können durch sogenannte Tastwerkzeuge, die mit ihrem Kontaktpunkt auf einem Punkt des Zielobjektes positioniert werden, verkörpert sein. Das Tastwerkzeug weist Markierungen, z. B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z. B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Feinanzielsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Für das Bestimmen der Orientierung des Messhilfsmittels wird eine Erfassungsrichtung der Kamera fortlaufend so ausgerichtet, dass ein Bild in Richtung des Tracking-Strahls des Lasertrackers erfassbar ist. Die Kamera kann weiters über eine Zoomfunktion verfügen, wobei eine Vergrösserungsstufe in Abhängigkeit der bestimmten Distanz zwischen Lasertracker und Zielpunkt bzw. Messhilfsmittel eingestellt werden kann. Mit diesen beiden Anpassungsfunktionen (Ausrichtung und Vergrösserung) kann die Kamera somit fortlaufend ein Bild erfassen, in dem das Messhilfsmittel und insbesondere die Lichtpunkte des Messhilfsmittels abgebildet sind. Dadurch entsteht ein elektronisch auswertbares, zweidimensionales Bild einer räumlichen Anordnung von Lichtpunkten.

Zur Auswertung des Bilds ist eine Bildverarbeitungseinheit vorgesehen. Damit kann eine Identifizierung der abgebildeten Lichtpunkte, eine Bestimmung der Schwerpunkte der abgebildeten Lichtpunkte und eine Bestimmung der Bildkoordinaten dieser Schwerpunkte, aus denen beispielsweise Raumwinkel zwischen der optischen Achse des Sensors, insbesondere der Erfassungsrichtung, und der Richtung vom Sensor zu den jeweiligen Lichtpunkten berechnet werden können, erfolgen.

Ein derartiges Koordinatenmessgerät mit einem Lasertracker und einer Bilderfassungseinheit für die Bestimmung von Position und Orientierung von Objekten im Raum, an denen Lichtpunkte und Reflektoren angeordnet sind, ist beispielsweise in der US 5,973,788 beschrieben.

Bei der Verwendung solcher Koordinatenmessgeräte werden am Objekt, dessen Position und Orientierung zu bestimmen ist, in relativ zum Objekt bekannten Positionen mindestens drei von der Bilderfassungseinheit registrierbare Lichtpunkte und mindestens ein den Messstrahl des Lasertrackers reflektierender Reflektor angeordnet. Die von der Bilderfassungseinheit zu registrierenden Lichtpunkte können aktive Lichtquellen (z. B. Leuchtdioden) sein oder zu beleuchtende Reflektoren, wobei die Lichtpunkte derart ausgestattet oder angeordnet sind, dass sie eindeutig voneinander unterscheidbar sind.

In der WO 2007/079600 A1 wird ein gattungsgemässes laserbasiertes Koordinatenmessgerät offenbart, bei welchem eine Lichtaustritts- und Lichtempfangsoptik der Distanzmessvorrichtung, eine Messkamera und eine Übersichtskamera auf einem gemeinsamen, bezüglich mindestens zweier Achsen drehbaren Element angeordnet sind und ein Laserstrahl mittels eines Lichtleiters von einem ausserhalb der Strahllenkeinheit angebrachten Lasermoduls in die Distanzmessvorrichtung eingekoppelt wird.

Gattungsgemässe laserbasierte Koordinatenmessgeräte weisen regelmässig einen in einer stationären Basis oder einer um die Stehachse drehbaren Stütze des Gerätes integrierten elektronischen Neigungssensor auf. Diese sind in der Lage, einen Winkel zur Lotrichtung zu messen. Sie übernehmen nicht nur die Funktion eines Höhenkompensators für den Vertikalkreis sondern überwachen zur Horizontierung und Überwachung der Stabilität während der Messung auch die Neigung der Stehachse in beiden Richtungen. Mittels Winkelencodern an den Achsen des Gerätes kann so indirekt auch eine Neigung der Strahllenkeinheit ermittelt werden, wodurch ein Basiskoordinatensystem des Messsystems zur Lotrichtung ausgerichtet werden.

Insbesondere bei Anwendungen, die hochpräzise Messungen erfordern, kann ein in der Basis vorgesehener Neigungssensor unter Umständen nicht genügend genaue Angaben über die aktuelle Neigung der Strahllenkeinheit liefern. So können bereits bei geringfügigen Abweichungen zwischen stationärer Basis und drehbarer Stütze von einer Standardausrichtung keine exakten Werte mehr geliefert werden. Ein in der beweglichen Stütze integrierter Neigungssensor kann hingegen während Drehbewegungen der Stütze keine verlässlichen Angaben zur Lotrichtung mehr liefern, sodass beispielsweise eine während der Messung auftretende Seitenneigung oder ein Wackeln des Gerätes aufgrund eines unebenen Untergrundes unerkannt bleibt, wodurch die Messergebnisse verfälscht werden.

Es ist deshalb Aufgabe der Erfindung, ein Koordinatenmessgerät der eingangs genannten Art bereitzustellen, welches Genauigkeit und Zuverlässigkeit der Messung gegenüber dem Stand der Technik verbessert.

Insbesondere ist es eine Aufgabe der Erfindung, ein solches Koordinatenmessgerät bereitzustellen, das ein Ermitteln der Neigung der Strahllenkeinheit mit gegenüber dem Stand der Technik höherer Genauigkeit und mit geringerer Fehleranfälligkeit erlaubt.

Darüber hinaus ist es Aufgabe der Erfindung, ein solches Koordinatenmessgerät bereitzustellen, das ein kontinuierliches Ermitteln der Neigung der Strahllenkeinheit auch während der Messung ermöglicht.

Mindestens eine dieser Aufgaben wird in erfindungsgemässer Weise durch das Koordinatenmessgerät mit den Merkmalen des Anspruchs 1 und/oder das Verfahren zum Messen von Koordinaten eines entfernten Punktes mit den Merkmalen des Anspruchs 12 gelöst. Vorteilhafte Ausgestaltungen der Erfindung finden sich in den abhängigen Ansprüchen.

Erfindungsgemäß weist ein Koordinatenmessgerät zwei Neigungssensoren auf, wovon der eine in einer stationären Basis des Geräts und der andere in einer drehbaren Stütze vorgesehen ist. Durch Auswerten der von den Sensoren generierten Neigungsdaten kann eine Richtung der Messstrahlung präziser und verlässlicher bestimmt werden. Die Neigungsdaten können darüber hinaus zum Überprüfen und ggf. Kalibrieren von Messparametern verwendet werden, sowie zum Überprüfen und ggf. Kalibrieren eines Lagers zwischen der Basis und der Stütze.

Ein Koordinatenmessgerät, insbesondere ein Lasertracker, zum Erfassen der Position und Ausrichtung eines im Raum bewegbaren, einen Retroreflektor aufweisenden Messhilfsmittels, das mindestens aufweist
- eine Stütze, die um eine erste Drehachse drehbar auf einer Basis befestigt ist,
- eine Strahllenkeinheit, die um eine zur ersten Drehachse im Wesentlichen orthogonale zweite Drehachse drehbar an der Stütze befestigt ist,
- ein erstes Lager zur drehbaren Lagerung der Strahllenkeinheit an der Stütze, und
- ein zweites Lager zur drehbaren Lagerung der Stütze an der Basis,
   wobei
- die Strahllenkeinheit eine optische Distanzmessvorrichtung aufweist mit mindestens einem Distanzmesser zur Messung der Distanz zum Messhilfsmittel mittels einer Messstrahlung,
- das erste Lager einen ersten Winkelencoder aufweist und das zweite Lager einen zweiten Winkelencoder aufweist, und
- an der Basis ein erster Neigungssensor bereitgestellt wird,
ist erfindungsgemäss gekennzeichnet durch einen zweiten Neigungssensor an der Stütze, wobei der erste Neigungssensor und der zweite Neigungssensor jeweils ausgestaltet sind zur Erfassung einer Neigung in mindestens zwei im Wesentlichen orthogonalen Richtungen gegenüber der Richtung der Schwerkraft und zur Ausgabe von Neigungsdaten, und durch eine Auswerte- und Steuereinheit, die zum Zwecke einer Selbstüberwachung und/oder Selbstkalibrierung des Koordinatenmessgeräts ausgestaltet ist zum Erfassen und Auswerten der Neigungsdaten der beiden Neigungssensoren.

In einer bevorzugten Ausführungsform weist das Koordinatenmessgerät eine Verfolgungsfunktionalität zur fortlaufenden Verfolgung des Messhilfsmittels auf, insbesondere wobei in der Strahllenkeinheit ein erster positionssensitiver Flächendetektor vorgesehen ist.

In einer weiteren Ausführungsform des Koordinatenmessgeräts weist die Strahllenkeinheit eine Messkamera zur Erfassung der räumlichen Ausrichtung des Messhilfsmittels und/oder mindestens eine erste Lokalisierungskamera zur Groblokalisierung des Messhilfsmittels auf.

In einer Ausführungsform weist das Koordinatenmessgerät einen Griff als Verbindungselement eines ersten und eines zweiten Holmes der Stütze, wobei der Griff die erste Drehachse nicht berührt, insbesondere wobei der Griff gebogen ist oder eine Öffnung aufweist, sodass eine Messung der Distanz zu einem Ziel entlang der ersten Drehachse ermöglicht wird.

In einer weiteren Ausführungsform des Koordinatenmessgeräts sind der erste und der zweite Neigungssensor Präzisionsneigungssensoren mit einem Einsatzbereich von ± 1,5 mrad bis ± 3,0 mrad, einer Genauigkeit von +/- 0,004 mrad bis +/- 0,04 mrad und einer Auflösung von 0,0005 mrad bis 0,0015 mrad.

In einer weiteren Ausführungsform des Koordinatenmessgeräts ist die Auswerte- und Steuereinheit dazu ausgestaltet, Neigungsdaten der beiden Neigungssensoren gleichzeitig zu erfassen und zueinander in Beziehung zu setzen, insbesondere Differenzen zwischen gleichzeitig erfassten Neigungsdaten zu ermitteln.

In einer weiteren Ausführungsform des Koordinatenmessgeräts ist die Auswerte- und Steuereinheit dazu ausgestaltet, Neigungsdaten der beiden Neigungssensoren unabhängig voneinander zu erfassen und zueinander in Beziehung zu setzen.

In einer weiteren Ausführungsform ist das Koordinatenmessgerät ausgestaltet zum Ausführen einer Messsequenz, im Rahmen derer die Stütze gegenüber der Basis mittels eines ersten Motors um die erste Drehachse gedreht wird, wobei die Auswerte- und Steuereinheit ausgestaltet ist,
- vor der Messsequenz Neigungsdaten beider Neigungssensoren zu erfassen und als Initialisierungsneigungsdaten zueinander in Beziehung zu setzen; und
- während der Messsequenz Neigungsdaten des zweiten Neigungssensors zu erfassen und zum Zwecke einer Selbstüberwachung und/oder Selbstkalibrierung des Koordinatenmessgeräts während der Messsequenz mit den Initialisierungsneigungsdaten in Beziehung zu setzen.

In einer Ausführungsform weist das Koordinatenmessgerät eine Kalibrierungsvorrichtung zur Verwendung mit einer Selbstkalibrierungsfunktionalität auf, im Rahmen derer Kalibrierungsparameter bezüglich einer Position und/oder Richtung der Messstrahlung bestimmbar sind, wobei auch ausgewertete Neigungsdaten für die Selbstkalibrierungsfunktionalität verwendet werden.

In einer weiteren Ausführungsform weist das Koordinatenmessgerät eine Meteo-Station mit Sensoren zur Ermittlung einer Temperatur, eines Drucks und/oder einer Feuchtigkeit einer Umgebungsluft auf, insbesondere in der Stütze oder in der Basis, wobei die Meteo-Station zur Ausgabe der ermittelten Daten als Umweltdaten ausgestaltet ist, und die Auswerte- und Steuereinheit auch zum Erfassen und Auswerten der Umweltdaten ausgestaltet ist.

Eine weitere Ausführungsform des Koordinatenmessgeräts ist dadurch gekennzeichnet, dass auch ausgewertete Umweltdaten für die Selbstkalibrierungsfunktionalität verwendbar sind.

In einer Ausführungsform des Koordinatenmessgeräts weist die Kalibrierungsvorrichtung an der Basis einen zweiten positionssensitiven Flächendetektor auf, auf welchen Messstrahlung von der Strahllenkeinheit emittierbar ist, und die Auswerte- und Steuereinheit ist ausgestaltet zur Bestimmung eines Auftreffpunkts von auf dem zweiten positionssensitiven Flächendetektor auftreffender Messstrahlung.

In einer anderen Ausführungsform des Koordinatenmessgeräts weist die Kalibrierungsvorrichtung einen Retroreflektor auf, der in einem zweidimensionalen Bereich, unabhängig vom Auftreffpunkt der Messstrahlung innerhalb des zweidimensionalen Bereiches, zur Erzeugung einer versatzfreien, koaxialen Retroreflexion einer auf ihm auftreffenden Messstrahlung ausgebildet ist.

In einer weiteren Ausführungsform des Koordinatenmessgeräts weist die Kalibrierungsvorrichtung an der Basis einen Retroreflektor und eine als Verkleinerungsobjektiv wirkende optische Baugruppe auf, und ist zur Bestimmung der Kalibrierungsparameter für das Koordinatenmessgerät mit der Messstrahlung derart anzielbar, dass ein optischer Strahlengang der Messstrahlung durch die optische Baugruppe verläuft und die Messstrahlung auf den Retroreflektor trifft, wodurch eine erste Kalibriermessung mit einer hinsichtlich relevanter Messgrössen für die Bestimmung der Kalibrierungsparameter simulierten Distanz zu dem Retroreflektor durchführbar ist, und die simulierte Distanz grösser ist als eine tatsächlich strukturell gegebene Entfernung zu dem Retroreflektor.

In einer Ausführungsform des Koordinatenmessgeräts ist die Kalibrierungsvorrichtung zur Kalibrierung mindestens des zweiten Winkelencoders mindestens mittels der Neigungsdaten ausgebildet.

In einer weiteren Ausführungsform des Koordinatenmessgeräts sind das erste Lager und/oder das zweite Lager als Fest-Los-Lager ausgestaltet.

In einer Ausführungsform umfasst das Koordinatenmessgerät ein Lasermodul, insbesondere einen Helium-Neon-Lasermodul, zur Erzeugung eines Laserstrahls als Messstrahlung, insbesondere wobei das Lasermodul in der Stütze bereitgestellt wird, und ein, insbesondere polarisationserhaltendes, Lichtleitersystem zur Übertragung von Licht zwischen der Stütze und der Strahllenkeinheit, insbesondere zum Einkoppeln eines Laserstrahls des Lasermoduls in die optische Distanzmessvorrichtung, insbesondere wobei das Lichtleitersystem eine erste Faser und eine zweite Faser aufweist, die durch eine verdrehungssichere Steckerverbindung miteinander verbunden sind, und/oder die erste und die zweite Faser Single-Mode-Fasern sind.

Die Erfindung umfasst auch ein Verfahren zum Messen von Koordinaten eines entfernten Punktes mittels eines Koordinatenmessgerätes, wobei das Koordinatenmessgerät mindestens aufweist
- eine Stütze, die um eine erste Drehachse drehbar auf einer Basis befestigt ist,
- eine Strahllenkeinheit, die um eine zur ersten Drehachse im Wesentlichen orthogonale zweite Drehachse drehbar an der Stütze befestigt ist,
- ein erstes Lager zur drehbaren Lagerung der Strahllenkeinheit an der Stütze, und
- ein zweites Lager zur drehbaren Lagerung der Stütze an der Basis,
wobei
- die Strahllenkeinheit eine optische Distanzmessvorrichtung aufweist mit mindestens einem Distanzmesser zur Messung der Distanz zum Messhilfsmittel mittels einer Messstrahlung,
- das erste Lager einen ersten Winkelencoder aufweist und das zweite Lager einen zweiten Winkelencoder aufweist, und
- an der Basis ein erster Neigungssensor bereitgestellt wird,
   und wobei das Verfahren aufweist
- ein Aussenden der Messstrahlung auf den Retroreflektor,
- ein Empfangen von dem Retroreflektor reflektierter Messstrahlung,
- ein Ermitteln einer Entfernung zu dem Retroreflektor anhand der reflektierten Messstrahlung,
- ein Ermitteln eines Winkels der Strahllenkeinheit zur Basis, und
- ein Erfassen einer Neigung der Basis in mindestens zwei im Wesentlichen orthogonalen Richtungen gegenüber der Richtung der Schwerkraft mittels eines ersten Neigungssensors.

Erfindungsgemäss ist das Verfahren gekennzeichnet durch ein Erfassen einer Neigung der Stütze in mindestens zwei im Wesentlichen orthogonalen Richtungen gegenüber der Richtung der Schwerkraft mittels eines zweiten Neigungssensors, wobei das Ermitteln des Winkels der Strahllenkeinheit zur Basis ein Auswerten der Neigung der Basis und der Neigung der Stütze umfasst.

In einer Ausführungsform des Verfahrens werden die Neigung der Basis und die Neigung der Stütze gleichzeitig erfasst und zueinander in Beziehung gesetzt, und insbesondere Differenzen zwischen den gleichzeitig erfassten Neigungen ermittelt.

In einer weiteren Ausführungsform des Verfahrens weist dieses eine Messsequenz auf, im Rahmen derer die Stütze gegenüber der Basis mittels eines ersten Motors um die erste Drehachse gedreht wird, wobei durch die Auswerte- und Steuereinheit
- vor der Messsequenz Neigungsdaten beider Neigungssensoren erfasst und als Initialisierungsneigungsdaten zueinander in Beziehung gesetzt werden; und
- während der Messsequenz Neigungsdaten des zweiten Neigungssensors erfasst und zum Zwecke einer Selbstüberwachung und/oder Selbstkalibrierung des Koordinatenmessgeräts während der Messsequenz mit den Initialisierungsneigungsdaten in Beziehung gesetzt werden.

Ein weiterer Aspekt der Erfindung bezieht sich auf ein System zur Befestigung des Koordinatenmessgerätes auf einem Stativ mit einer integrierten Stossdämpfung.

Ein erfindungsgemässes System aus einem Koordinatenmessgerät und einer Schnellverschlusseinheit zur Befestigung des Koordinatenmessgerätes auf einem Stativ weist mindestens einen Stossdämpfer zum Vermindern von Erschütterungen des Koordinatenmessgerätes bei einem Aufsetzen desselben auf die Schnellverschlusseinheit auf, wobei der Stossdämpfer zwischen der Schnellverschlusseinheit und einer Basis des Koordinatenmessgerätes wirkt.

In einer Ausführungsform des Systems aus Koordinatenmessgerät und Schnellverschlusseinheit weist die Schnellverschlusseinheit eine erste Kontaktfläche und das Koordinatenmessgerät eine Basis mit einer zweiten Kontaktfläche auf, und die erste Kontaktfläche und die zweite Kontaktfläche sind ausgestaltet und angeordnet, einander nach dem Aufsetzen vollflächig zu kontaktieren. Dabei weist der Stossdämpfer ein bewegliches Element zur Impulsaufnahme auf, das aus der ersten Kontaktfläche oder der zweiten Kontaktfläche herausragt und dazu ausgestaltet ist, nach dem Aufsetzen ein vollflächiges Kontaktieren der ersten Kontaktfläche und der zweiten Kontaktfläche ermöglichen. Insbesondere ist dabei das bewegliche Element eine Dämpferkolbenstange, der Stossdämpfer ist hydraulisch, und das System weist mindestens drei Stossdämpfer auf.

Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigt schematisch:
- Fig. 1: ein als ein Lasertracker ausgestaltetes erfindungsgemässes Koordinatenmessgerät und ein Messhilfsmittel;
- Fig. 2a-c: ein als ein Lasertracker ausgestaltetes erfindungsgemässes Koordinatenmessgerät jeweils in einer Ansicht von vorne, von der Seite und von oben;
- Fig. 3: eine beispielhafte Ausgestaltung eines als ein Lasertracker ausgestalteten erfindungsgemässen Koordinatenmessgerätes in einem Querschnitt;
- Fig. 4: eine beispielhafte Ausgestaltung einer Strahllenkeinheit eines erfindungsgemässen Koordinatenmessgerätes in einer Frontansicht;
- Fig. 5: eine beispielhafte Anordnung der Positionierungskameras;
- Fig. 6: einen beispielhaften Aufbau einer optischen Einheit eines erfindungsgemässen Koordinatenmessgerätes;
- Fig. 7: einen beispielhaften Aufbau einer Strahllenkeinheit eines erfindungsgemässen Koordinatenmessgerätes in einem Querschnitt;
- Fig. 8: eine beispielhafte Ausgestaltung einer VarioKamera als Messkamera;
- Fig. 9a-b: eine beispielhafte Ausgestaltung einer Fest-Los-Lagerung der Strahllenkeinheit;
- Fig. 10: ein beispielhaftes Zusammenwirken von Sensoreinheiten und optischer Einheit mit der Auswerteund Steuereinheit;
- Fig. 11: eine beispielhafte Ausgestaltung eines Schnellverschlusses am Stativ; und
- Fig. 12: eine beispielhafte, mit Fig. 11 korrespondierende, Ausgestaltung eines Schnellverschlusses an der Basis.

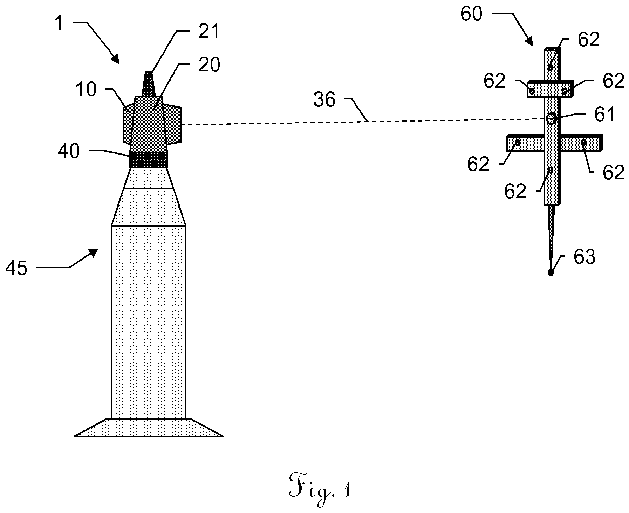

Figur 1 zeigt eine beispielhafte Ausführungsform eines erfindungsgemässen als ein Lasertracker 1 ausgestalteten Koordinatenmessgerätes. Der gezeigte Lasertracker 1 weist eine Basis 40, eine darauf angebrachte Stütze 20 mit einem Griff 21 und eine an zwei (hier nicht dargestellten) Holmen der Stütze 20 gelagerte Strahllenkeinheit 10 auf. Der Lasertracker 1 ist auf einem Stativ 45 angeordnet und misst mittels eines Laserstrahles 36 die Distanz zu einem auf einem Messhilfsmittel 60 befindlichen Retroreflektor 61. Das Messhilfsmittel 60 - hier beispielhaft als Messtaster ausgeführt - umfasst weiterhin eine Anzahl Zielmarkierungen 62, beispielsweise in Form von reflektierenden oder selbstleuchtenden Lichtpunkten, sowie einen Messkopf 63 zum Plazieren auf einem zu vermessenden Zielpunkt eines Zielobjektes.

Der dargestellte Lasertracker 1 weist eine Messkamera auf, die insbesondere als fokussierbares Kamerasystem mit variabler Vergrösserung (Vario-Kamerasystem) ausgestaltet ist, um die auf dem Messhilfsmittel 60 angeordneten Zielmarkierungen 62 zu erfassen. Anhand der von der Messkamera aufgenommenen Positionen der Zielmarkierungen 62 ist die räumliche Ausrichtung des Messhilfsmittels 60 bestimmbar.

Ein mit einer solchen Messkamera verwendbares Verfahren zum fortlaufenden Bestimmen der räumlichen Lage eines mehrere Zielmarkierungen 62 in fixer, bekannter räumlicher Verteilung relativ zueinander aufweisenden Messhilfsmittels 60 ist in der EP 2 557 391 A1 beschrieben: Im Rahmen dieses Verfahrens erfolgt ein fortlaufendes Erfassen von Kamera-Bildern von den Zielmarkierungen 62 mit einer Messkamera mit einem eine Vielzahl von Pixeln aufweisenden Flächensensor sowie ein fortlaufendes Durchführen von Auslesedurchgängen, bei welchen die Pixel hinsichtlich eines jeweils aktuellen Belichtungswerts ausgelesen werden. Ferner werden Bild-Positionen von den abgebildeten Zielmarkierungen 62 im jeweils aktuellen Kamera-Bild bestimmt und die jeweils aktuelle räumliche Lage des Messhilfsmittels 60 basierend darauf abgeleitet. Dabei werden fortlaufend jeweils aktuelle Interessens-Bereiche auf dem Flächensensor abhängig von einer Sammlung von in mindestens einem vorgängig erfassten Kamera-Bild bestimmten Bild-Positionen gesetzt. Das Bestimmen der aktuellen Bild-Positionen erfolgt dann ausschliesslich unter Berücksichtigung von nur jenen aktuellen Belichtungswerten, die von innerhalb von den aktuell gesetzten Interessens-Bereichen liegenden Pixeln des Flächensensors erhalten sind.

Um Bewegungen des Messhilfsmittels 60 zu erkennen und nachvollziehen zu können, sodass der Laserstrahl 36 auf den Retroreflektor 61 ausgerichtet bleibt, weist der Lasertracker 1 einen positionssensitiven Detektor (PSD) auf, insbesondere einen Tracking-Flächensensor, wie er beispielsweise in der WO 2007/079600 A1 geoffenbart ist.

Der PSD ist vorzugsweise in der Strahllenkeinheit 10 angeordnet und ermöglicht durch ein Erfassen der Ausrichtung des von einem Ziel, insbesondere dem Retroreflektor 61, reflektierten Laserstrahls 30 das Nachführen der Ausrichtung des Laserstrahls 30. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden.

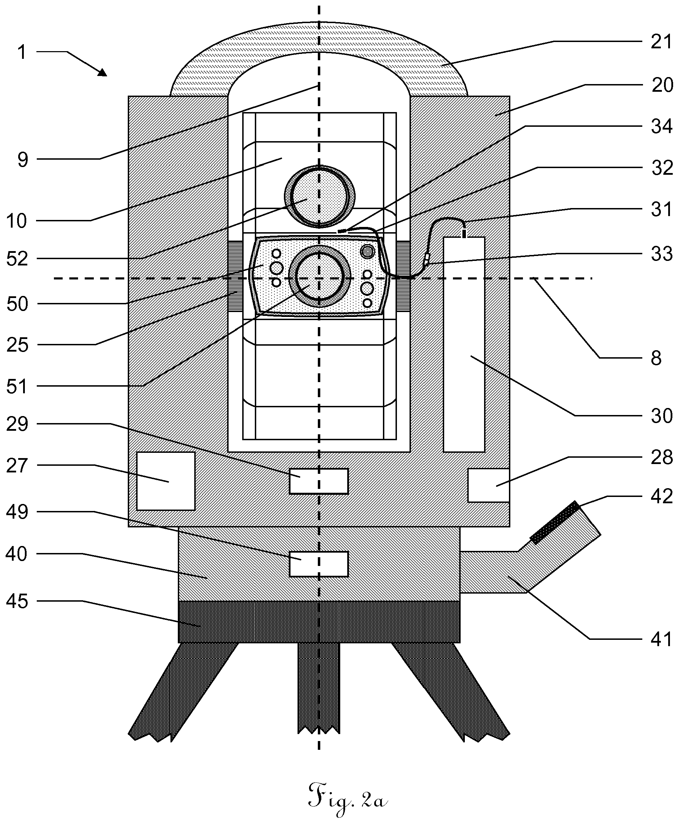

Figur 2a zeigt eine beispielhafte Ausführungsform eines erfindungsgemässen Lasertrackers 1 in einer Frontalansicht. Der Lasertracker 1 umfasst eine Basis 40, die auf einer Haltevorrichtung befestigbar ist, hier dargestellt in Form eines Stativs 45. Auf der Basis 40 ist eine Stütze 20 um die Vertikalachse 9 drehbar gelagert angebracht. Die Stütze 20 umfasst einen ersten und einen zweiten Holm, die von einem unteren Teil der Stütze 20 aus nach oben ragen und an welchen eine Strahllenkeinheit 10 mittels einer Welle 25 um die Horizontalachse 8 kippbar gelagert ist. An den beiden Holmen ist oben ein Griff 21 für den Transport und die Handhabung des Lasertrackers 1 durch einen Benutzer angebracht.

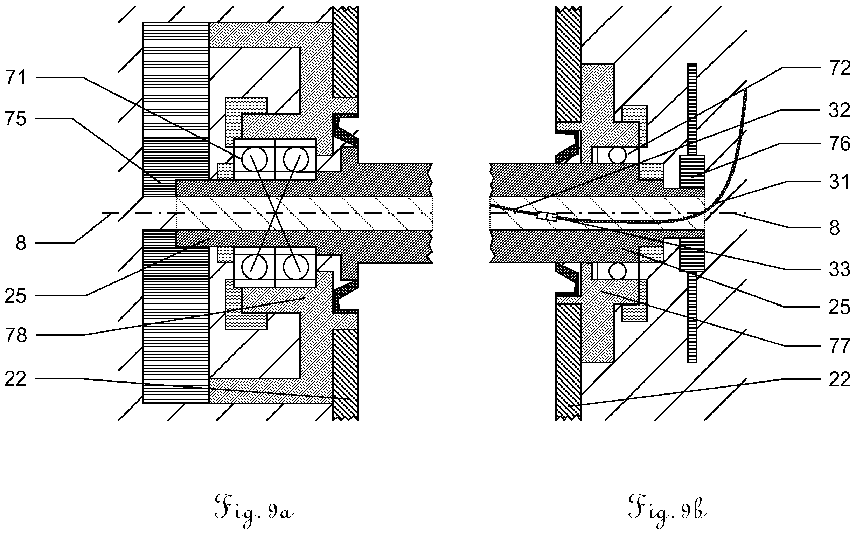

Sowohl die Lagerung der Stütze 20 an der Basis 40 als auch die Lagerung der Strahllenkeinheit 10 an der Stütze 20 ist vorzugsweise als ein Fest-Los-Lager ausgeführt. Achsfehler infolge von Temperatureinflüssen und die daraus resultierenden Genauigkeitsverluste werden so minimiert. Ausserdem ist eine temperaturbedingte Ausdehnung der Welle 25 unkritisch und beeinflusst eine Verspannung des Lagers nicht. Die Verspannung der Lager bleibt dadurch über den gesamten Temperatureinsatzbereich konstant. Details eines solchen Fest-Los-Lagers werden in den Figuren 9a und 9b gezeigt.

Der Griff 21 kann insbesondere fest mit den beiden Holmen verbunden sein, beispielsweise aus einem Guss mit diesen hergestellt oder angeschweisst sein, so dass er als zusätzlich stabilisierendes Element für die Holme dient, insbesondere hinsichtlich eines Verbiegens. Vorteilhaft kann der Griff 21 derart geformt sein, dass er eine exakt nach oben gerichtete Messung, d. h. entlang der Vertikalachse 9, mittels des Laserstrahles erlaubt. Alternativ kann der Griff 21 an der entsprechenden Stelle auch eine Öffnung für einen Durchtritt des Laserstrahls aufweisen.

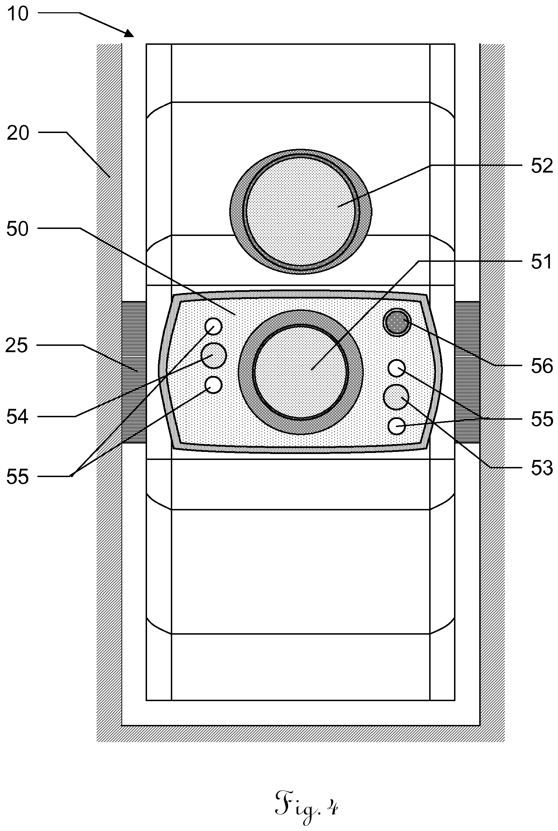

An der Strahllenkeinheit 10 sind mehrere Optiken vorgesehen, darunter eine Optik 52 einer Messkamera sowie ein Objektivmodul 50 für die Zielverfolgungsfunktionalität mit einer Laseraussende- und -empfangsoptik 51 einer optischen Distanzmessvorrichtung. Des weiteren weist die Strahllenkeinheit 10 vorzugsweise eine Optik einer Lokalisierungskamera zur Groblokalisierung des Messhilfsmittels und eine Optik einer Übersichtskamera zur Bereitstellung von Bildern für einen Benutzer auf. Die Optiken werden in Figur 4 detaillierter beschrieben.

In die Stütze 20, bzw. in einen der Holme ist ein Lasermodul 30 integriert, vorzugsweise ein Helium-Neon-Lasermodul (HeNe-Lasermodul). Besonders vorteilhafte Ausführungsformen eines verwendbaren Lasermoduls 30 sind auch in der CH 706 633 A2 geoffenbart.

Ein eine erste Faser 31 und eine zweite Faser 32 aufweisendes Lichtleitersystem führt von diesem Lasermodul 30 durch die Welle 25 hindurch in die Strahllenkeinheit 10 bis zu einem Kollimator 34 einer (hier nicht dargestellten) Distanzmessvorrichtung, insbesondere eines Interferometers. Dabei ist die in der Stütze 20 verlaufende erste Faser 31 des Lichtleitersystems über eine vorzugsweise in der Stütze 20 vorgesehene Steckerverbindung 33 mit der in der Strahllenkeinheit 10 verlaufenden zweiten Faser 32 des Lichtleitersystems verdrehungsfrei verbunden. Die Steckerverbindung 33 in der Nähe des Lasermoduls 30 in der Stütze 20 anzuordnen hat den Vorteil, dass das Lasermodul 30 mitsamt der ersten Faser 31 leichter austauschbar ist. Vorzugsweise ist das Lichtleitersystem polarisationserhaltend, und/oder die erste und die zweite Faser 31,32 sind Single-Mode-Fasern.

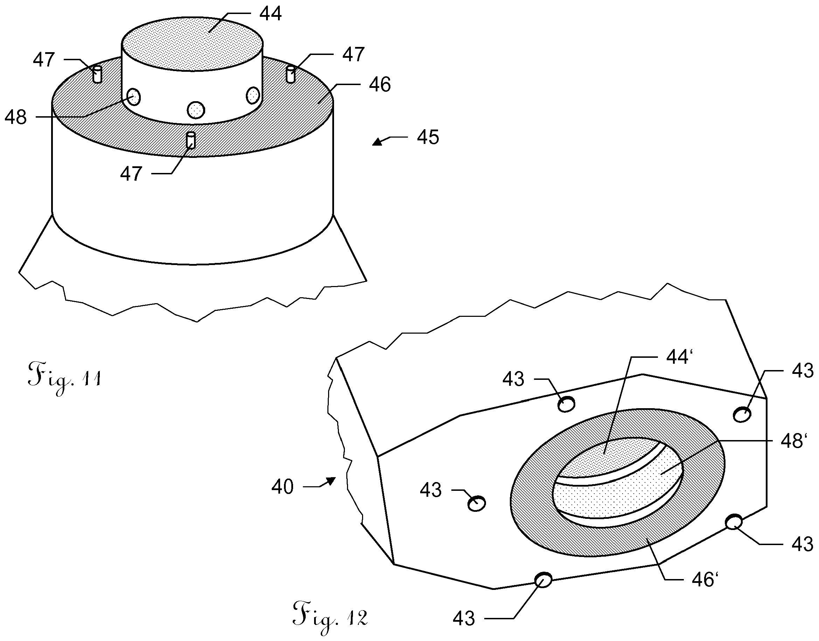

Die Basis 40 ist an einem Stativ 45 befestigbar, insbesondere mittels eines Schnellverschlusses (siehe Figur 11). Da die Basis 40 den stationären, nicht rotierenden Teil des Lasertrackers 1 darstellt, sind eventuell vorhandene Kabelverbindungen des Lasertrackers (insbesondere zur Stromversorgung, zur Kommunikation mit externen Sensor- oder Kontrolleinheiten oder zur Verbindung mit Netzwerken) vorzugsweise mit der Basis 40 verbunden. Diese Verbindungen können alternativ aber auch über die Verbindung mit dem Stativ 45 bereitgestellt werden. Die Basis 40 weist vorzugsweise eine Selbstausgleichseinheit 42 für den Selbstausgleich bzw. die Initialisierung des Lasertrackers 1 auf.

Diese Selbstausgleichseinheit 42 kann beispielsweise, wie in Figur 2a dargestellt, auf einem Auslegearm 41 der Basis 40 angebracht sein und einen oder mehrere Spiegel, Reflektoren und/oder Sensoren enthalten. Besonders vorteilhafte (hier nicht dargestellte) Ausgestaltungen einer Selbstausgleichseinheit 42 sind insbesondere in den Europäischen Patentanmeldungen EP 2 687 866 A1, EP 2 746 806 A1 und EP 2 746 807 A1 ausführlich beschrieben. So kann die Selbstausgleichseinheit beispielsweise als eine Kombination einer PSD mit einem Retroreflektor ausgestaltet oder auch ganz oder teilweise im Innern der Strahllenkeinheit 10 vorgesehen sein, insbesondere als eine in den Strahlgang der Messstrahlung hineinbewegbare retroreflektierende Folie. Ebenso kann die Selbstausgleichseinheit 42 an der Basis 40 einen Retroreflektor und eine als Verkleinerungsobjektiv wirkende optische Baugruppe aufweisen, und zur Bestimmung der Kalibrierungsparameter für den Lasertracker 1 mit der Messstrahlung derart anzielbar sein, dass ein optischer Strahlengang der Messstrahlung durch die optische Baugruppe verläuft und die Messstrahlung auf den Retroreflektor trifft, wodurch eine Kalibriermessung mit einer simulierten Distanz zu dem Retroreflektor, die grösser ist als eine tatsächliche Entfernung zu dem Retroreflektor, durchführbar ist.

Der Lasertracker 1 weist ausserdem eine Auswerte- und Steuereinheit 27 auf. Diese ist hier beispielhaft in der Stütze 20 vorgesehen.

An der Basis 40 ist ein erster Neigungssensor 49 und an der Stütze 20 ein zweiter Neigungssensor 29 vorgesehen, die zur Erfassung einer Neigung in mindestens zwei im Wesentlichen orthogonalen Richtungen gegenüber der Richtung der Schwerkraft ausgestaltet und angeordnet sind.

An der Stütze 20 ist ausserdem eine Meteo-Station 28 vorgesehen. Diese weist Sensoren zum Erfassen diverser Umweltfaktoren auf. Insbesondere umfassen die Sensoren Temperatur-, Luftdruck-, und Feuchtigkeitssensoren. Alternativ kann die Meteo-Station 28 auch ausserhalb des Lasertrackers 1, beispielsweise in einer separaten Kontrolleinheit, untergebracht sein.

Die von den Neigungssensoren 29,49 und der Meteo-Station 28 generierten Neigungs- und Umweltdaten werden der Auswerte- und Steuereinheit 27 des Lasertrackers 1 zur Verfügung gestellt.

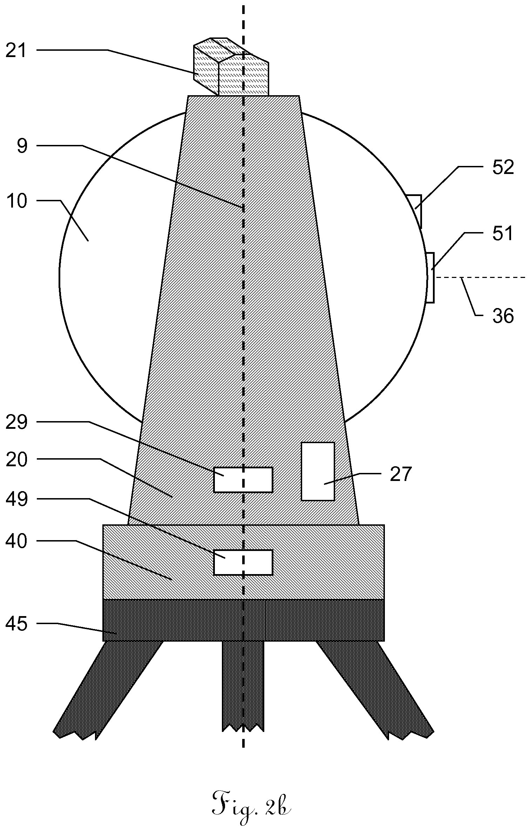

Figur 2b ist der Lasertracker 1 aus Figur 2a in einer Seitenansicht gezeigt. Auch dieser Ansicht ist der Aufbau des Lasertrackers 1 entnehmbar mit der auf einem Stativ 45 angeordneten Basis 40, der darauf um die Vertikalachse 9 drehbar befestigten Stütze 20 und der an dieser um die Horizontalachse drehbar gelagerten Strahllenkeinheit 10. Dargestellt ist zusätzlich der von der Laseraussende- und - empfangsoptik 51 der optischen Distanzmessvorrichtung emittierte Laserstrahl 36.

In dieser Ansicht erkennbar ist auch die Form des in seiner Mitte seitlich gebogenen Griffes 21, durch welche eine exakt nach oben gerichtete Messung mittels des Laserstrahles 36, d. h. eine Messung entlang der Vertikalachse 9, ermöglicht wird.

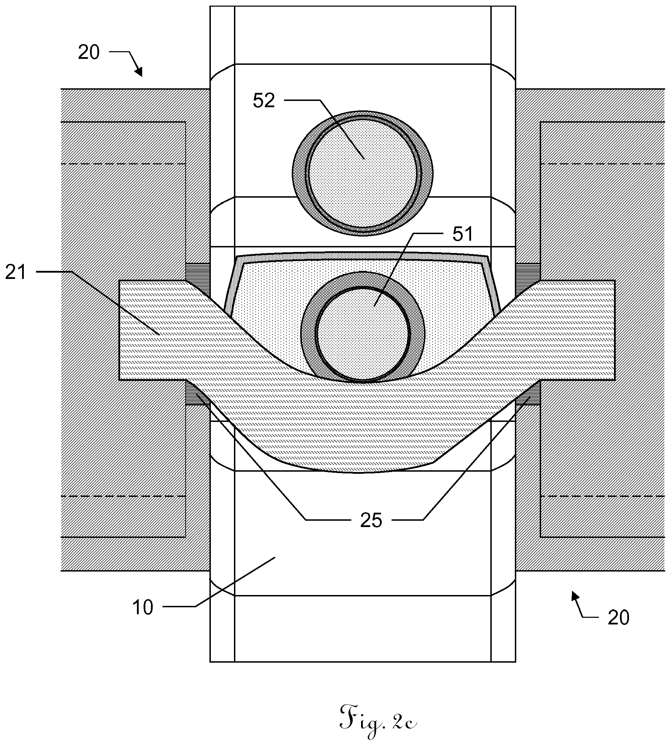

Dies ist auch in der Figur 2c dargestellt, die den Lasertracker von oben zeigt. Die an der Stütze 20 gelagerte Strahllenkeinheit 10 ist in dieser Ansicht exakt nach oben gedreht, so dass eine Messung entlang der Vertikalachse 9 erfolgen kann. Der Griff 21 ist derart ausgestaltet, dass in dieser Ausrichtung der Strahllenkeinheit 10 weder die Optik 52 der Messkamera noch die Laseraussende- und -empfangsoptik 51 durch den Griff 21 verdeckt werden.

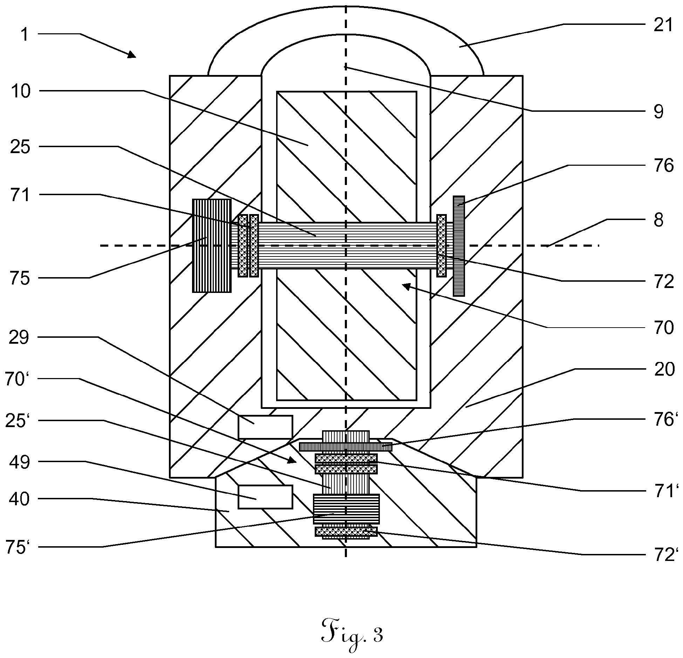

Figur 3 zeigt eine Ausführungsform des Lasertrackers 1 in einem Querschnitt, wobei die Lager 70,70' des Gerätes dargestellt werden. Diese sind in diesem Beispiel als Fest-Los-Lager ausgeführt, können aber natürlich auch anders ausgestaltet sein. Ein erstes horizontales Lager 70 lagert die Strahllenkeinheit 10 an der Stütze 20, ein zweites vertikales Lager 70 lagert die Stütze 20 an der Basis 40. Eine beispielhafte Ausführungsform des ersten Lagers 70 ist in den Figuren 9a und 9b detaillierter dargestellt.

Die erste Fest-Los-Lager-Vorrichtung 70 ermöglicht eine Drehbarkeit der Teleskopeinheit 10 um die Kippachse 8 und beinhaltet eine in den beiden seitlichen Holmen der Stütze 20 gelagerte Welle 25, wobei in einem Holm ein Festlager 71 und im anderen Holm ein Loslager 72 bereitgestellt wird. Ein Motor 75 ist dazu vorgesehen, die Welle 25 rotativ anzutreiben. Auf der anderen Seite ist ein erster Winkelencoder 76 dazu vorgesehen, relative und/oder absolute Positionen der Welle 25 zu erfassen, um eine aktuelle Ausrichtung der Teleskopeinheit 10 gegenüber der Stütze 20 zu bestimmen. Die Welle 25 ist vorzugsweise aus Stahl, Messing oder Keramik gefertigt und im wesentlichen zylindrisch.

Die zweite Fest-Los-Lager-Vorrichtung 70' ermöglicht eine Drehbarkeit der Stütze 20 um die Stehachse 9 und beinhaltet eine in der Basis 40 gelagerte und an der Stütze befestigte Welle 25', wobei im oberen, der Stütze 20 zugewandten Teil der Basis 40 ein Festlager 71' und im unteren Teil ein Loslager 72' bereitgestellt wird. Am Loslager 72' ist ein Motor 75' dazu vorgesehen, die Welle 25' rotativ anzutreiben. Am Festlager 71' ist ein zweiter Winkelencoder 76' dazu vorgesehen, relative und/oder absolute Positionen der Welle 25' zu erfassen, um eine aktuelle Ausrichtung der Stütze 20 gegenüber der Basis 40 zu bestimmen.

In Figur 4 wird die mittels der Welle 25 an der Stütze 20 gelagerte Strahllenkeinheit 10 in einer Frontansicht dargestellt. Das Objektivmodul 50 beinhaltet ausser dem Objektiv 51 der Distanzmessvorrichtung zwei Lokalisierungskameras 53,54 mit Beleuchtungsmitteln 55, sowie eine Übersichtskamera 56. Oberhalb des Objektivmoduls 50 ist das Objektiv 52 der Messkamera angebracht.

Jede der beiden Lokalisierungskameras 53,54 weist Beleuchtungsmittel 55, beispielsweise LED, zur aktiven koaxialen Zielausleuchtung, insbesondere im infraroten Bereich, auf und ist geeignet, dass von den Beleuchtungsmitteln 55 emittierte und von einem Retroreflektor eines Messhilfsmittels reflektierte Licht zu detektieren. Ausserdem bereitgestellt werden Mittel zur Bildverarbeitung, die eine Erkennung des Messhilfsmittels, bzw. der auf dem Messhilfsmittel angebrachten Retroreflektoren, ermöglichen. Auch Lösungen mit nur einer Lokalisierungskamera 53 sind möglich. Beispielsweise werden in der Europäischen Patentanmeldung mit der Anmeldenummer 13176647.9 verschiedene Ausführungen beschrieben, in denen nur eine einzige Lokalisierungskamera zur Lokalisierung des Ziels benötigt wird.

In der hier dargestellten Ausführungsform identifizieren die Lokalisierungskameras 53,54 mittels der aktiven Beleuchtung reflektierende Objekte, wie Retroreflektoren auf dem Messhilfsmittel. Die von den beiden Kameras individuell identifizierten Objekte werden zusammengeführt, dann wird mittels Triangulation die Entfernung zu jedem der identifizierten Objekte gemessen, um eine Ausrichtung des Lasertrackers auf ein Ziel zu ermöglichen, ohne dass weitere Messungen nötig sind.

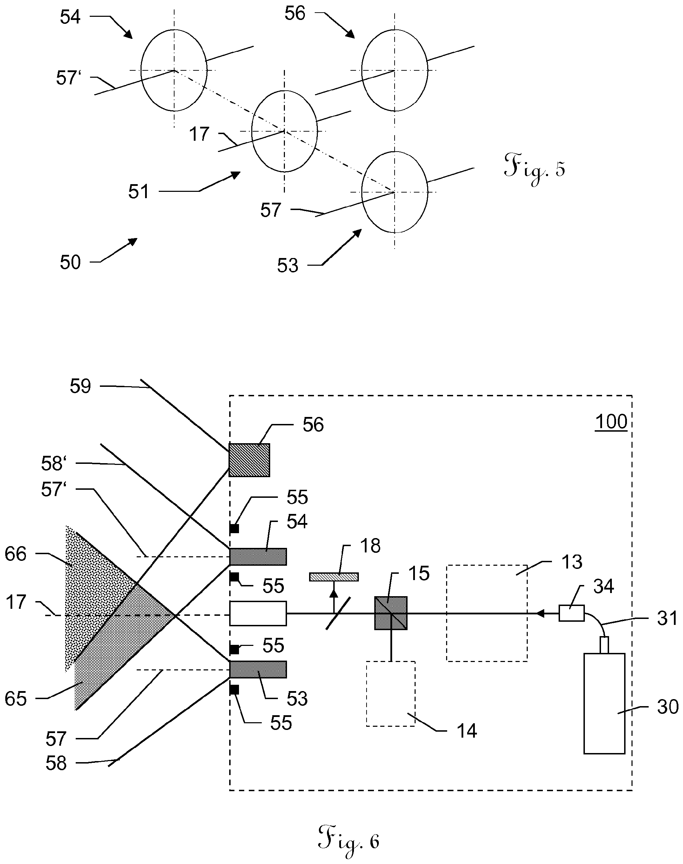

Vorzugsweise werden bei mindestens zwei Lokalisierungskameras 53,54, wie in Figur 5 dargestellt, diese symmetrisch um das Objektiv der Distanzmessvorrichtung 51 angeordnet. Die Sichtachsen 57,57' der Lokalisierungskameras 53,54 können parallel zur Achse 17 der der Distanzmessvorrichtung angeordnet sein. Weitere vorteilhafte Anordnungen der Lokalisierungskameras 53,54 sind im Patentdokument EP 2 602 641 B1 beschrieben. Insbesondere sind die Lokalisierungskameras 53,54, wie in Figur 5 dargestellt, so angeordnet, dass von der ersten Lokalisierungskamera 53 aus betrachtet jeweils mindestens eine Lokalisierungskamera auf der gegenüberliegenden Seite der ersten Drehachse und mindestens eine Lokalisierungskamera auf der gegenüberliegenden Seite der zweiten Drehachse liegt. In diesem Fall liegt die zweite Lokalisierungskamera 54 sowohl auf der gegenüberliegenden Seite der ersten als auch der zweiten Drehachse.

Figur 6 zeigt eine Ausführungsform eines optischen Aufbaus eines erfindungsgemässen Lasertrackers. Eine optische Einheit 100 des Lasertrackers weist dabei eine Laserstrahlquelle 30 - beispielsweise eine HeNe-Laserquelle oder eine Laserdiode - und einen Kollimator 34 zur Einkopplung der mit der Strahlquelle 30 erzeugten Laserstrahlung in den Messstrahlengang auf. Die Strahlung wird im gezeigten Aufbau mittels einer optischen Faser 31 von der Laserstrahlquelle 30 zum Kollimator 34 geführt, kann aber alternativ auch direkt oder durch optische Umlenkmittel in den Messstrahlengang eingekoppelt werden. Die optische Einheit 100 verfügt zudem über eine Interferometereinheit 13, mittels derer Entfernungsänderungen zum Ziel detektiert und gemessen werden können. Die mit der Strahlquelle 30 erzeugte Strahlung wird als Messstrahlung für das Interferometer 13 benutzt, im Interferometer 13 in einen Referenzpfad und Messpfad aufgespalten und nach Reflexion des Messstrahls am Ziel zusammen mit dem Referenzstrahl an einem Detektor detektiert. Ausserdem ist eine Absolutdistanzmesseinheit (ADM-Einheit) 14 mit einer weiteren Strahlquelle, z. B. einer Laserdiode oder einer SLED (Superluminescent LED), und einem weiteren Detektor vorgesehen. Die ADM-Einheit 14 dient zur Distanzbestimmung zum Ziel, wobei die damit erzeugte Strahlung vermittels eines Strahlteilers 15 zusammen mit der Interferometerstrahlung auf einen gemeinsamen Messstrahlengang geführt wird.

Der von der Strahlquelle der ADM-Einheit 14 ausgehende Lichtstrahl wird innerhalb der Einheit auf einen polarisierenden Strahlteiler und von dort durch einen elektrooptischen Modulator zu einem wellenlängenabhängigen Strahlteiler 15 geführt. Ein derartiger Strahlteiler 15 mit wellenlängenabhängiger Strahlteilung wird insbesondere bei unterschiedlichen Emissionswellenlängen der beiden Lichtquellen eingesetzt. Das rückkehrende Licht wird in der der ADM-Einheit 14 durch den polarisierenden Strahlteiler 15 auf einen Detektor der ADM-Einheit 14 geführt. Insbesondere sind in diesem Zusammenhang auch andere ADM-Anordnungen und -Verfahren verwendbar, bei denen sich der Messlichtstrahl durch beispielsweise den wellenlängenabhängigen Strahlteiler 15 ein- und auskoppeln lässt. Ein Beispiel für einen solchen Distanzmesser ist in der WO 03/062744 A1 geoffenbart. Grundsätzlich sind hier wie in den anderen Ausführungsformen der Erfindung auch andere Typen von Absolutdistanzmessern, wie z.B. Phasenmesser, einsetzbar.

Die Anordnung der optischen Bauteile und die Führung der Messstrahlung in der optischen Einheit 100 definierten eine Messrichtung bzw. eine optische Messachse 17. Für eine präzise Bestimmung einer Entfernung zum Ziel können Messwerte von sowohl ADM-Einheit 14 und Interferometer 13 berücksichtigt und insbesondere verknüpft werden. In einer speziellen Ausführungsform eines Lasertrackers können ADM-Einheit 14 und Interferometer 13 unterschiedliche Messstrahlengänge definieren und/oder baulich separiert, insbesondere in unterschiedlichen Messgruppen, angeordnet sein.

Zudem ist in der optischen Einheit 100 ein positionssensitiver Detektor (PSD) 18 derart angeordnet, dass am Ziel reflektierte Messlaserstrahlung auf diesem detektiert werden kann. Mittels dieser PSD 18 kann eine Ablage des erfassten Strahls aus einem Detektornullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD 18 möglichst klein, d. h. korrespondierend zum Strahldurchmesser des Messlaserstrahls, gewählt. Eine Erfassung mit der PSD 18 erfolgt koaxial zur Messachse 17, sodass die Erfassungsrichtung der PSD 18 der Messrichtung entspricht. Die Anwendung des PSD-basierten Trackings und der Feinanzielung kann erst erfolgen, nachdem der Messlaser auf das retroreflektierende Ziel anhand der Bilderfassung der beiden Kameras 53,54 und einer photogrammetrischen Auswertung der Bilder ausgerichtet worden ist.

Die optische Einheit 100 weist ferner zwei Zielsuchkameras 53,54 mit einer jeweiligen optischen Achse bzw. Erfassungsrichtung 57,57' und Beleuchtungsmittel 55 auf. Des Weiteren definiert jede der Zielsuchkameras 53,54 ein Zielsuchsichtfeld 58,58', wobei die Kameras 53,54 derart angeordnet sind, dass die Sichtfelder 58,58' überlappen und somit ein Überlappungsbereich 65 festgelegt ist.

Mittels der Beleuchtungsmittel 55 kann elektromagnetische Strahlung zur Beleuchtung des Ziels emittiert werden. Wird diese Strahlung am Ziel reflektiert und zumindest teilweise in Richtung der beiden Zielsuchkameras 53,54 reflektiert, kann die reflektierte Beleuchtungsstrahlung mit beiden Kameras 53,54 in jeweils einem Bild als Zielposition erfasst werden. Durch die derartige Anordnung der Zielsuchkameras 53,54, dass ein überlappender Sichtbereich 65 vorliegt, kann das Ziel in diesem Bereich 65 mit beiden Kameras 53,54 erfasst werden. und eine Grobentfernung zum Ziel und/oder eine Grobposition des Ziels bestimmt werden.

Ausser der beispielhaft abgebildeten sind diverse weitere, hier nicht in ihrer Vielfältigkeit darstellbare, Anordnungen der Zielsuchkameras 53,54 möglich. In einer speziellen Ausführungsform können die Zielsuchkameras 53,54 beispielsweise auch derart angeordnet sein, dass deren optische Achsen 57,57' jeweils parallel versetzt oder in einem definierten Winkel relativ zur Messachse 17 angeordnet sind. In einer weiteren speziellen Ausführungsform ist eine gewinkelte Anordnung der optischen Achsen 57,57' relativ zur Messachse 17 in der Art realisierbar, dass die optischen Achsen 57,57' jeweils "schielend" zueinander ausgerichtet sind oder zur Messachse 17 "hinschielend" oder von dieser "wegschielend" ausgerichtet sind, und somit nicht parallel zur Messachse 17 verlaufen. Eine solche Anordnung kann beispielsweise für das Erzeugen eines relativ grossen Überlappungsbereichs 65 der Sichtfelder 58,58' vorgesehen sein. In einer weiteren speziellen Ausführungsform können die Zielsuchkameras 53,54 und die Messachse 17 derart angeordnet sein, dass zumindest eine der optischen Achsen 57,57' der Zielsuchkameras 33,34 koaxial, d. h. nicht versetzt, zur Messachse 17 angeordnet ist.

Des weiteren ist an der optischen Einheit 100 eine Übersichtskamera 56 mit einem Übersichtssichtfeld 59 vorgesehen, wie auch in der Europäischen Patentanmeldung EP 2 618 175 A1 beschrieben. Dabei ist die Übersichtskamera 56 so angeordnet, dass das Übersichtssichtfeld 59 jeweils mit den Zielsuchsichtfeldern 58,58' überlappt und dadurch ein gemeinsamer Überlappungsbereich 66 definiert wird. Durch die gezeigte Anordnung der Kameras 53,54,56 und deren Sichtfelder 58,58',59 kann ein Referenzieren von mit den Zielsuchkameras 33,34 erfassbaren Suchbildpositionen in einem mit der Übersichtskamera 36 erfassbaren Übersichtsbild erfolgen.

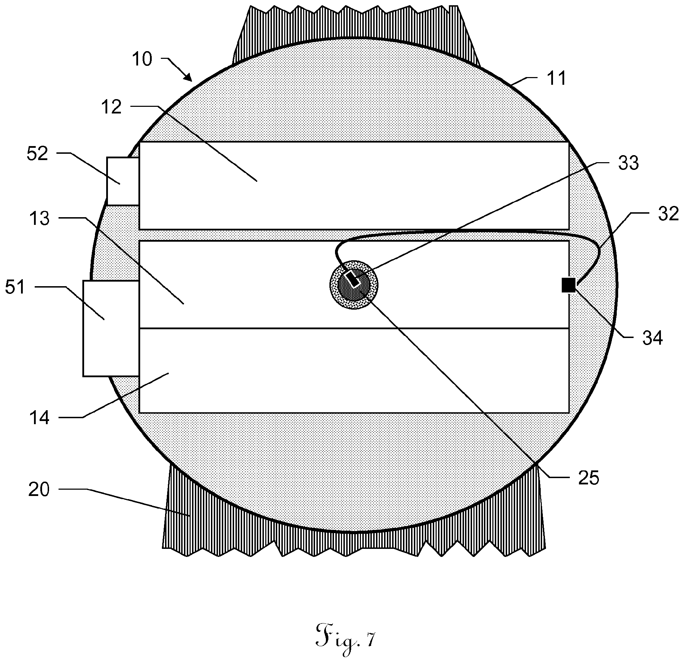

In Figur 7 ist in einem Querschnitt ein beispielhafter Aufbau einer Strahllenkeinheit 10 gezeigt. Die Strahllenkeinheit 10 weist ein - vorzugsweise aus Aluminium oder einem anderen leichten, gut wärmeleitenden Material bestehendes - Gehäuse 11 auf. Für eine verbesserte Abführung von innerhalb der Strahllenkeinheit 10 entstehender Wärme können energieintensive Komponenten der Strahllenkeinheit 10 direkt mit diesem Gehäuse gekoppelt werden, was vorteilhaft einem Überhitzen der Komponenten entgegenwirkt. Alternativ oder zusätzlich können Wärmerohre oder andere Wärmeleiter die Wärme dieser Komponenten zum Gehäuse oder nach Aussen leiten. Des weiteren sind die Komponenten gemäss ihrer Wärmeentwicklung vorzugsweise derart in der Strahllenkeinheit 10 verteilt angeordnet, dass die Wärmeentwicklung möglichst gleichmässig über das Volumen der Strahllenkeinheit verteilt wird und optimal über das Gehäuse 11 an die Umgebung abgebbar ist. Wärmeempfindliche Komponenten können zusätzlich auch wärmegedämmt eingebaut sein, um sie von der Wärme anderer Komponenten abzuschirmen.

Die Strahllenkeinheit 10 ist mittels der zentral angeordneten Welle 25 an der Stütze 20 gelagert, vorzugsweise mittels eines (in Figuren 9a und 9b dargestellten) Fest-Los-Lagers. Durch die vorzugsweise hohle Welle 25 führt ein polarisationserhaltendes Lichtleitersystem. Eine im Innern der Strahllenkeinheit 10 verlaufende lichtleitende Faser 32 verbindet gemeinsam mit einer in der Stütze 20 verlaufenden Faser (hier nicht dargestellt), mit der sie über eine Steckerverbindung 33 verdrehungsfrei verbunden ist, eine in der Stütze 20 befindliche Laserquelle, insbesondere ein HeNe-Lasermodul (hier nicht dargestellt), mit einem Kollimator 34 eines Interferometers 13.

Das Interferometer 13 bildet zusammen mit einem Absolutdistanzmesser 14 eine Distanzmessvorrichtung zum Messen der Distanz zu einem Ziel, insbesondere einem Messhilfsmittel mit einem Retroreflektor. Die Distanzmessvorrichtung weist eine gemeinsame Optik 51 für Interferometer 13 und Absolutdistanzmesser 14 auf.

Vorzugsweise ist das Interferometer 13 mit einer Überprüfungsfunktionalität zur Überprüfung der Messung hinsichtlich allfällig auftretender Messfehler ausgestattet. Eine solche ist in der Europäischen Patentanmeldung EP 2 634 594 A1 beschrieben: Im Rahmen dieser Überprüfungsfunktionalität wird zunächst ein durch das fortlaufende Detektieren des Intensitätszustandes vorliegender, zeitlich aufgelöster Interferenzverlauf derart analysiert, dass fortlaufend ein Bewegungsparameter für eine erkannte Relativbewegung zwischen Ziel und Interferometer 13 abgeleitet wird. Dieser Parameter repräsentiert eine relative Bewegungsgrösse, z. B. Relativgeschwindigkeit oder Relativbeschleunigung, des Ziels bzw. des Interferometers 13. Der fortlaufend abgeleitete Bewegungsparameter wird dann fortlaufend mit einem jeweiligen Kriterium für die jeweils bestimmte Bewegungsgrösse verglichen. Mittels des Kriteriums ist dabei die Bewegungsgrösse derart definiert, dass eine Unterscheidung zwischen möglich ausführbaren und unmöglich ausführbaren Bewegungen des Ziels und/oder des Interferometers 13 auf Basis dieser Grösse durchführbar ist.

Die Strahllenkeinheit 10 weist darüber hinaus eine Messkamera 12 zum Bestimmen der Orientierung eines Messhilfsmittels mit einer eigenen Optik 52 auf. Die Kamera kann vorzugsweise über eine Zoomfunktion verfügen, wobei eine Vergrösserungsstufe in Abhängigkeit der bestimmten Distanz zwischen Lasertracker und Zielpunkt bzw. Messhilfsmittel eingestellt werden kann (Vario-Kamera). Mit diesen beiden Anpassungsfunktionen (Ausrichtung und Vergrösserung) kann die Kamera somit fortlaufend ein Bild erfassen, in dem das Messhilfsmittel und insbesondere die Lichtpunkte des Messhilfsmittels (siehe Figur 1) abgebildet sind. Dadurch entsteht ein elektronisch auswertbares zweidimensionales Bild einer räumlichen Anordnung von Lichtpunkten.

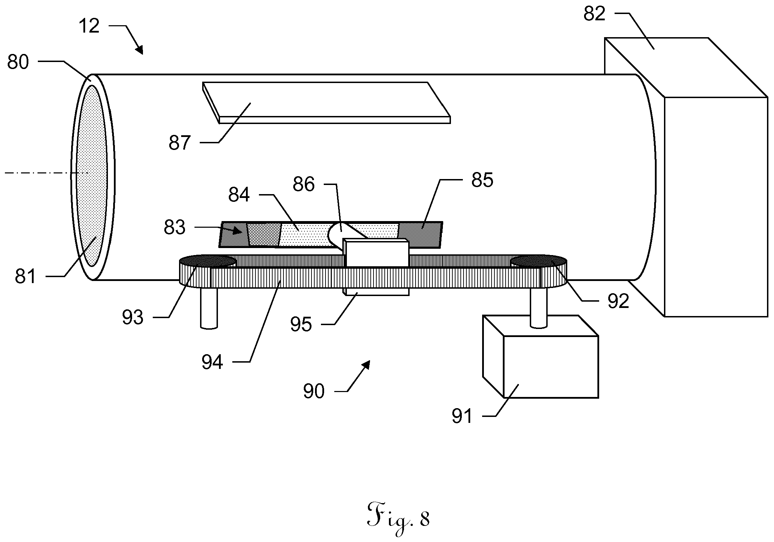

Figur 8 zeigt eine Ausführungsform einer als Vario-Kamera ausgeführten Messkamera 12 im Detail. Besonders vorteilhafte Ausgestaltungen einer solchen Vario-Kamera sind auch in der Europäischen Patentanmeldung EP 2 639 615 A1 beschrieben.

Die in Figur 8 dargestellte Vario-Kamera 12 beinhaltet einen Objektivtubus, der einen Tubuskörper 80 aufweist und der an einem Ende mit einem optischen Element 81 in Form einer Linse und am anderen Ende von einem Sensorelement 82 begrenzt wird. Auf der Aussenseite kann der Tubuskörper 80 - wie hier beispielhaft dargestellt - die Form eines Zylinders einnehmen, aber ebenso als quaderförmiger Block oder anderweitig geformt sein. Der - hier nicht dargestellte - durch den Tubuskörper 80 definierte Innenraum des Objektivtubus (Tubusinnenraum) weist jedoch vorteilhaft eine im Wesentlichen zylindrische Form auf.

Im Tubusinnenraum ist mindestens ein Wagen 83 linear beweglich angebracht. Der Wagen 83 weist eine optische Baugruppe und einen Optikträger 84 auf und ist vermittels einer Antriebseinheit 90 entlang der Längsachse des Objektivtubus bewegbar.

Die Antriebseinheit 90 weist einen Motor 91, insbesondere in Form eines Gleichstrom-Getriebemotors, eine vorspannbare Umlenkrolle 92, eine weitere Umlenkrolle 93, sowie einen über die Umlenkrollen 92,93 gespannten Zahnriemen 94 auf. Am Zahnriemen 94 ist ein bewegungsübertragendes Element 95 befestigt, beispielsweise aufgeklemmt, das über einen Mitnehmer 86 die Bewegung auf den Wagen 83 überträgt. Zur Führung des Mitnehmers 86 weist der Tubuskörper 80 einen länglichen Schlitz 85 auf. Zum besseren Gleiten in diesem Führungslängsschlitz 85 kann der Mitnehmer 86 über Gleitelemente verfügen (nicht dargestellt).

Auf dem Tubuskörper 80 ist ein Abtastmodul 87 mit einem Abtastsensor zum Erfassen eines Positionscodes und Ableiten einer Position des Wagens 83 angeordnet. Der Positionscode ist Teil eines Positionsgeberelementes (nicht dargestellt), welches in einer unveränderlichen räumlichen Beziehung zur Optikbaugruppe des Wagens 83 angeordnet ist, insbesondere dadurch, dass alle Komponenten des Wagens 83, bzw. mindestens die Optikbaugruppe und die das Positionsgeberelement tragende Komponente, spielfrei miteinander verbunden sind. Dadurch ist es möglich, aus dem vom Abtastsensor erzeugten Signal direkt eine Veränderung der Position der Optikbaugruppe abzuleiten. Ist die räumliche Beziehung ausserdem bekannt, kann auch eine eindeutige aktuelle Position der Optikbaugruppe abgeleitet werden.

Die Figuren 9a und 9b zeigen eine beispielhafte Ausführungsform eines Fest-Los-Lagers zur Lagerung der Strahllenkeinheit (hier nicht dargestellt) des Lasertrackers an der Stütze 20. Ein solches Fest-Los-Lager ist in der Europäischen Patentanmeldung EP 2 607 843 A1 beschrieben. Auch die Lagerung der Stütze 20 an der Basis 40 ist vorzugsweise mittels eines Fest-Los-Lagers ausgeführt.

In den Figuren 9a und 9b ist jeweils im Querschnitt ein Teil der Welle 25 der Fest-Los-Lager-Vorrichtung mit seiner jeweiligen Lagerung in den beiden Holmen der Stütze 20 dargestellt. Figur 9a zeigt die Lagerung am ersten Holm mit dem Festlager 71, Figur 9b zeigt die Lagerung am zweiten Holm mit dem Loslager 72. Die Welle 25 ist hohl und weist an den Lagerungen eine zylindrische Form auf.

Das in Figur 9a dargestellte Festlager 71 weist zwei paarweise angeordnete Wälzlager auf, insbesondere ein Duplex-Spindellagerpaar oder ein UKF®-Spindellager mit Trennkugeln. Dargestellt ist beispielhaft eine X-Anordnung der paarweise angeordneten Wälzlager.

Das in Figur 9b dargestellte Loslager 72 weist ein Kugellager mit einem Kugelkäfig auf, das zur Aufnahme radialer Kräfte bestimmt ist. Das Loslager 72 ist an der Welle 25 fixiert und im Holm der Stütze in axialer Richtung beweglich angeordnet, um sich etwa bei temperaturbedingten Ausdehnungsschwankungen der Welle 25 mit dieser spannungsfrei mitbewegen zu können. Der Wälzkörper des Loslagers 72 weist gegenüber der Innen- und Aussenlauffläche ein gewisses Übermass auf. Beide Laufflächen haben eine hohe Härtegüte.

Die beiden Lager 71,72 sind vorzugsweise nicht direkt in angrenzende, insbesondere aus Aluminium bestehende, Leichtbauteile der Holme montiert, sondern in Anschlussteile 77,78 aus Stahl. Dadurch bleibt die gewählte Passung zwischen Lager und Flansch über den gesamten Temperatureinsatzbereich erhalten. Die stählernen Anschlussteile 77,78 werden fest mit Bauteilen 22 der Holme verbunden. Achsfehler infolge von Temperatureinflüssen und daraus resultierende Genauigkeitsverluste werden so minimiert.

In Figur 9b ist ausserdem ein durch die hohle Welle 25 geführtes, vorzugsweise polarisationserhaltendes, Lichtleitersystem dargestellt. Dieses weist eine erste Faser 31, die zu einem Lasermodul in der Stütze 20 führt, eine zweite Faser 32, die in die Strahllenkeinheit führt, und eine Steckerverbindung 33 zur verdrehungsfreien Verbindung der beiden Fasern 31,32 auf.

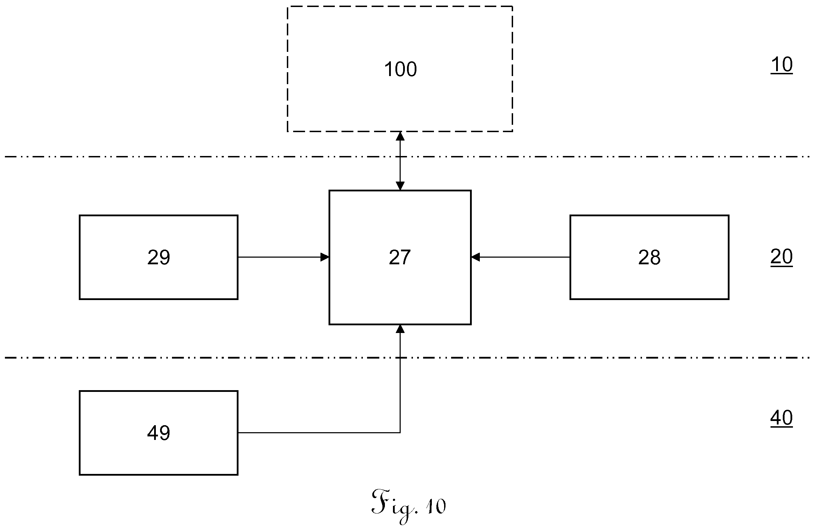

In Figur 10 ist schematisch ein beispielhaftes Zusammenwirken von Sensoreinheiten 28,29,49 und optischer Einheit 100 mit der Auswerte- und Steuereinheit 27 dargestellt. Als Sensoreinheiten fungieren in dieser Darstellung zwei Neigungssensoren 29,49, die zur Erfassung einer Neigung in mindestens zwei im Wesentlichen orthogonalen Richtungen gegenüber der Richtung der Schwerkraft ausgestaltet und angeordnet sind, und eine Meteo-Station 28 zur Messung der umgebenden Luft mittels Temperatur-, Luftdruck-, und Feuchtigkeitssensoren. Dabei sind der erste Neigungssensor in der Basis 40, die Auswerte- und Steuereinheit 27, die Meteo-Station 28 und der zweite Neigungssensor 29 in der Stütze 20 und die optische Einheit 100 in der Strahllenkeinheit 10 angeordnet. Die einzelnen Sensoreinheiten 28,29,49 senden erfasste Neigungs- und Umweltdaten an die Auswerte- und Steuereinheit 27, die die Daten auswertet. Die Auswerte- und Steuereinheit 27 steht zusätzlich im Datenaustausch mit der optischen Einheit 100.

Die Auswertung der Neigungsdaten und Umweltdaten kann insbesondere zur Erzeugung von Kalibrierungsdaten verwendet werden. So lässt beispielsweise die Umgebungstemperatur auf eine aktuelle Ausdehnung der Achsen des Gerätes schliessen, und eine Abweichung zwischen den Neigungswerten beider Neigungssensoren auf eine nicht exakte Ausrichtung der Stütze 20 entlang der Stehachse. Beides kann Einfluss auf Messungen der optischen Einheit 100 haben, und ist insbesondere für hochgenaue Anwendungen von Relevanz.

Die Daten können zum einen fortlaufend, d. h. auch während des Messvorganges des Koordinatenmessgerätes, erfasst und ausgewertet werden, um die Messung fortlaufend exakt zu halten, oder zum anderen im Rahmen einer Selbstkalibrierungsfunktionalität, insbesondere zusammen mit anderen Kalibrierungsdaten, von einer Kalibrierungsvorrichtung zur periodischen Kalibrierung des Gerätes verwendet werden.

Die Daten der beiden Neigungssensoren 29,49 können dabei gleichzeitig von der Auswerte- und Steuereinheit 27 erfasst werden, was einen direkten Vergleich zwischen beiden Werten erlaubt. Im Fall einer wesentlichen Abweichung der beiden Werte voneinander kann insbesondere auch an einen Benutzer ein Hinweis auf eine nötige Wartung, beispielsweise eine Justierung oder einen Austausch der Lagerung der Stütze an der Basis, gegeben werden.

Ebenso ist es vorteilhaft möglich, zunächst Daten des ersten Neigungssensors 29 zu erfassen und diese Daten mit während einer Messsequenz erfassten Daten des zweiten Neigungssensors 49 abzugleichen. Dies ist insbesondere dann von Bedeutung, wenn der in der Stütze 20 befindliche erste Neigungssensor 29 derart beschaffen ist, dass während einer Messsequenz aufgrund von Drehungen auftretende Kräfte beim Auslesen der aktuellen Neigung Abweichungen auftreten können. Beispielsweise können die bei einem Lasertracker auftretenden starken Drehbewegungen in einem als "Öltopf" mit Flüssigkeitshorizont ausgestalteten Neigungssensor 29, die Oberfläche der zur Neigungsbestimmung eingesetzten Flüssigkeit in Schwingungen versetzen. Dies kann Wellen- oder Schaumbildung zur Folge haben, was beim Lenken eines Lichtstrahls auf den Flüssigkeitshorizont zu einem anderen Reflektionsergebnis und somit zu fehlerhaften Werten führt.

In einem solchen Fall kann der Messsequenz eine Initialisierungssequenz vorangehen, im Rahmen derer Neigungsdaten des ersten Neigungssensors 29 in mehreren, z. B. vier, verschiedenen Positionen der Stütze 20 gegenüber der Basis 40 erfasst werden - vorzugsweise zusammen mit Neigungsdaten des zweiten Neigungssensors 49. Während der Messsequenz selbst werden dann nur Neigungsdaten des zweiten Neigungssensors 49 erfasst, welcher im Gegensatz zum ersten Neigungssensor 29 von den Drehbewegungen der Stütze 20 unbeeinflusst bleibt. So kann auch während der Messsequenz eine ungewollte Veränderung der Neigung des Koordinatenmessgerätes, beispielsweise ein Kippen oder Einsinken, erkannt werden.

Als Konsequenz der erkannten Neigungsänderung während des Messens kann dann beispielsweise eine akustische oder optische Warnung an den Benutzer ausgegeben werden oder die Messsequenz automatisch angehalten und eine neue Initialisierung durchgeführt werden. Vorteilhaft können die fortlaufend ermittelten Neigungsdaten des zweiten Neigungssensors 49 aber auch zur Echtzeitkorrektur der während der Messsequenz durch das Koordinatenmessgerät ermittelten Koordinaten verwendet werden.

In den Figuren 11 und 12 ist eine beispielhafte Ausgestaltung einer Schnellverschlusseinheit zur Befestigung der Basis 40 am Stativ 45 dargestellt, wobei die Schnellverschlusseinheit erfindungsgemäss eine vertikale Dämpfung bereitstellt. Beim Aufsetzen der Basis 40 auf das Stativ 45 durch einen Benutzer kann es, insbesondere aufgrund des hohen Gewichts des Koordinatenmessgerätes, zu Erschütterungen der empfindlichen Komponenten des Gerätes kommen. Hierbei kann es je nach Schwere und Häufigkeit der Erschütterungen zu geringfügigen - aber für die Durchführung hochpräziser Messungen unvorteilhaften - Verschiebungen einzelner Elemente oder sogar zu Beschädigungen kommen. Ein Dämpfungskonzept kann daher dazu beitragen, die Präzision des Gerätes auch langfristig sicherzustellen.

Figur 11 zeigt den obersten Teil des Stativs 45, der zur Aufnahme der Basis des Koordinatenmessgerätes als Schnellverschlusseinheit ausgestaltet ist. Diese weist eine ebene Kontaktfläche 46 auf, aus der sich ein Sockel mit einer Wölbung 44 an seinem oberen Ende erhebt. In dem Sockel seitlich versenkt befinden sich Arretierstifte 48, die mittels einer Schnellverschlussmechanik, insbesondere einem Arretierhebel, (hier nicht dargestellt) des Stativs 45 ausfahrbar gestaltet sind.

Aus der Kontaktfläche 46 ragen drei Dämpferkolbenstangen 47 hervor, die jeweils ein bewegliches zur Impulsaufnahme vorgesehenes Element eines kompakten, in die Schnellverschlusseinheit versenkten Stossdämpfers bilden.

Figur 12 zeigt die Unterseite der Basis 40, die auf die in Figur 11 gezeigte Schnellverschlusseinheit des Stativs 45 aufsetzbar ist. Die Basis 40 weist dazu jeweils mit einer Komponente der Schnellverschlusseinheit korrespondierende Komponenten auf. Die ebene Kontaktfläche 46' hat die gleichen Ausmasse wie die Kontaktfläche 46 der Schnellverschlusseinheit und liegt nach dem Aufsetzen auf ihr auf. Die Wölbung 44' am Ende einer Aushöhlung in der Mitte der ebenen Fläche 46' nimmt beim Aufsetzen die Wölbung 44 auf dem Sockel des Stativs 45 auf. Die Arretierstifte 48 des Stativs sorgen im ausgefahrenen Zustand für ein Festklemmen der Aushöhlungs-Innenseite 48' der Basis bzw. wirken als Riegel, wenn sie in optionale Öffnungen (hier nicht dargestellt) in der Aushöhlungs-Innenseite 48' eingreifen. In letzterem Fall können Markierungen an Stativ und Basis dem Benutzer die korrekte Ausrichtung der Basis auf dem Stativ anzeigen. An der Unterseite der Basis 40 sind ausserhalb der Kontaktfläche 46 fünf Gummipuffer 43 angebracht.

Die in Figur 11 gezeigten Dämpferkolbenstangen 47 dämpfen die beim Aufsetzen wirkenden Kräfte und schützen so die Komponenten des Gerätes vor zu starken Erschütterungen. Durch ihre Verbindung mit einem Stossdämpfer werden die Dämpferkolbenstangen 47 beim Aufsetzen des Koordinatenmessgerätes unter dessen Gewicht langsam genau soweit in die Stossdämpfer in dem Stativ gedrückt, dass sie plan mit der Kontaktfläche 46 der Schnellverschlusseinheit sind, wodurch die beiden Kontaktflächen 46,46' einander auf voller Fläche kontaktieren können.

Die Stossdämpfer können insbesondere einschraubbar sein, beispielsweise vom Typ Enidine TK 21M oder vom Typ Enidine TK 6M. In ihrer Anzahl und Verteilung sind die Dämpfer vorzugsweise an das Gewicht des entsprechenden Koordinatenmessgerätes angepasst; beispielsweise können drei oder vier Stossdämpfer gleichmässig über die Kontaktfläche verteilt sein. Statt in der Schnellverschlusseinheit können die Stossdämpfer natürlich ebenso in der Basis 40 untergebracht sein, bzw. einige in der Schnellverschlusseinheit und einige an der Basis 40.

Die an der Unterseite der Basis 40 ausserhalb der Kontaktfläche 46 angebrachte Gummipuffer 43 schützen in einem gewissen Umfang durch ihre puffernde Wirkung vor Stössen, wenn das Koordinatenmessgerät nicht auf dem Stativ 45 befestigt, sondern auf einer anderen harten Oberfläche wie einem Tisch oder dem Boden abgestellt wird. Die hier gezeigten fünf Gummipuffer 43 sind beispielsweise aus einem synthetischen Kautschuk wie Ethylen-Propylen-Dien-Kautschuk (EPDM) hergestellt und stehen vorzugsweise mindestens einen Millimeter über die Unterseite der Basis 40 vor.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Koordinatenmessgerät (1), insbesondere Lasertracker, zum Erfassen der Position und Ausrichtung eines im Raum bewegbaren, einen Retroreflektor (61) aufweisenden Messhilfsmittels (60), wobei das Koordinatenmessgerät (1) mindestens aufweist
• eine Basis und eine Stütze (20), die um eine erste Drehachse (9) drehbar auf der Basis (40) befestigt ist,
• eine Strahllenkeinheit (10), die um eine zur ersten Drehachse (9) im Wesentlichen orthogonale zweite Drehachse (8) drehbar an der Stütze (20) befestigt ist,
• ein erstes Lager (70) zur drehbaren Lagerung der Strahllenkeinheit (10) an der Stütze (20), und
• ein zweites Lager (70') zur drehbaren Lagerung der Stütze (20) an der Basis (40),
wobei
• die Strahllenkeinheit (10) eine optische Distanzmessvorrichtung aufweist mit mindestens einem Distanzmesser (13, 14) zur Messung der Distanz zum Messhilfsmittel (60) mittels einer Messstrahlung (36),
• das erste Lager (70) einen ersten Winkelencoder (76) aufweist und das zweite Lager (70') einen zweiten Winkelencoder (76') aufweist, und
• an der Basis (40) ein erster Neigungssensor (49) bereitgestellt wird,
**gekennzeichnet durch**
• einen zweiten Neigungssensor (29) an der Stütze (20), wobei der erste Neigungssensor (49) und der zweite Neigungssensor (29) jeweils ausgestaltet sind
∘ zur Erfassung einer Neigung in mindestens zwei im Wesentlichen orthogonalen Richtungen gegenüber der Richtung der Schwerkraft und
∘ zur Ausgabe von Neigungsdaten, und
• eine Auswerte- und Steuereinheit (27), die zum Zwecke einer Selbstüberwachung und/oder Selbstkalibrierung des Koordinatenmessgeräts (1) ausgestaltet ist zum Erfassen und Auswerten der Neigungsdaten der beiden Neigungssensoren (29, 49).

2. Koordinatenmessgerät (1) nach Anspruch 1,
**gekennzeichnet durch**
eine Verfolgungsfunktionalität zur fortlaufenden Verfolgung des Messhilfsmittels (60), insbesondere wobei in der Strahllenkeinheit (10) ein erster positionssensitiver Flächendetektor (18) vorgesehen ist.

3. Koordinatenmessgerät (1) nach einem der Ansprüche 1 oder 2,
**dadurch gekennzeichnet, dass**
die Strahllenkeinheit (10) aufweist
• eine Messkamera (12) zur Erfassung der räumlichen Ausrichtung des Messhilfsmittels (60), und/oder
• mindestens eine erste Lokalisierungskamera (53) zur Groblokalisierung des Messhilfsmittels (60).

4. Koordinatenmessgerät (1) nach einem der vorangehenden Ansprüche,
**gekennzeichnet durch**
einen Griff (21) als Verbindungselement eines ersten und eines zweiten Holmes der Stütze (20), wobei der Griff (21) die erste Drehachse (9) nicht berührt, insbesondere wobei der Griff (21) gebogen ist oder eine Öffnung aufweist, sodass eine Messung der Distanz zu einem Ziel entlang der ersten Drehachse (9) ermöglicht wird.

5. Koordinatenmessgerät (1) nach einem der vorangehenden Ansprüche,
**dadurch gekennzeichnet, dass**
der erste und der zweite Neigungssensor (29, 49) Präzisionsneigungssensoren sind mit
• einem Einsatzbereich von ± 1,5 mrad bis ± 3,0 mrad,
• einer Genauigkeit von +/- 0,004 mrad bis +/- 0,04 mrad und
• einer Auflösung von 0,0005 mrad bis 0,0015 mrad.

6. Koordinatenmessgerät (1) nach einem der vorangehenden Ansprüche,
**dadurch gekennzeichnet, dass**
die Auswerte- und Steuereinheit (27) ausgestaltet ist, Neigungsdaten der beiden Neigungssensoren (29, 49)
• gleichzeitig zu erfassen und zueinander in Beziehung zu setzen, insbesondere Differenzen zwischen gleichzeitig erfassten Neigungsdaten zu ermitteln; und/oder
• unabhängig voneinander zu erfassen und zueinander in Beziehung zu setzen.

7. Koordinatenmessgerät (1) nach einem der vorangehenden Ansprüche,
**dadurch gekennzeichnet, dass**
das Koordinatenmessgerät (1) ausgestaltet ist zum Ausführen einer Messsequenz, im Rahmen derer die Stütze (20) gegenüber der Basis (40) mittels eines ersten Motors (75') um die erste Drehachse (8) gedreht wird, wobei die Auswerte- und Steuereinheit (27) ausgestaltet ist,
• vor der Messsequenz Neigungsdaten beider Neigungssensoren (29, 49) zu erfassen und als Initialisierungsneigungsdaten zueinander in Beziehung zu setzen; und
• während der Messsequenz Neigungsdaten des zweiten Neigungssensors (49) zu erfassen und zum Zwecke einer Selbstüberwachung und/oder Selbstkalibrierung des Koordinatenmessgeräts (1) während der Messsequenz mit den Initialisierungsneigungsdaten in Beziehung zu setzen.

8. Koordinatenmessgerät (1) nach einem der vorangehenden Ansprüche,
**gekennzeichnet durch**
eine Meteo-Station (28) mit Sensoren zur Ermittlung einer Temperatur, eines Drucks und/oder einer Feuchtigkeit einer Umgebungsluft, insbesondere bereitgestellt in der Stütze (20) oder in der Basis (40), wobei
• die Meteo-Station (28) zur Ausgabe der ermittelten Daten als Umweltdaten ausgestaltet ist, und
• die Auswerte- und Steuereinheit (27) auch zum Erfassen und Auswerten der Umweltdaten ausgestaltet ist.

9. Koordinatenmessgerät (1) nach einem der vorangehenden Ansprüche,
**gekennzeichnet durch**
eine Kalibrierungsvorrichtung (42) zur Verwendung mit einer Selbstkalibrierungsfunktionalität, im Rahmen derer Kalibrierungsparameter bezüglich einer Position und/oder Richtung der Messstrahlung (36) bestimmbar sind, wobei auch ausgewertete Neigungsdaten für die Selbstkalibrierungsfunktionalität verwendet werden, insbesondere wobei
• die Kalibrierungsvorrichtung (42) an der Basis (40) einen zweiten positionssensitiven Flächendetektor aufweist, auf welchen Messstrahlung (36) von der Strahllenkeinheit (10) emittierbar ist, und die Auswerte- und Steuereinheit (27) ausgestaltet ist zur Bestimmung eines Auftreffpunkts von auf dem zweiten positionssensitiven Flächendetektor auftreffender Messstrahlung (36),
• die Kalibrierungsvorrichtung (42) einen Retroreflektor aufweist, der in einem zweidimensionalen Bereich, unabhängig vom Auftreffpunkt der Messstrahlung (36) innerhalb des zweidimensionalen Bereiches, zur Erzeugung einer versatzfreien, koaxialen Retroreflexion einer auf ihm auftreffenden Messstrahlung (36) ausgebildet ist, oder
• die Kalibrierungsvorrichtung (42) an der Basis (40) einen Retroreflektor und eine als Verkleinerungsobjektiv wirkende optische Baugruppe aufweist, und zur Bestimmung der Kalibrierungsparameter für das Koordinatenmessgerät (1) mit der Messstrahlung (36) derart anzielbar ist, dass ein optischer Strahlengang der Messstrahlung (36) durch die optische Baugruppe verläuft und die Messstrahlung (36) auf den Retroreflektor trifft, wodurch
∘ eine erste Kalibriermessung mit einer hinsichtlich relevanter Messgrössen für die Bestimmung der Kalibrierungsparameter simulierten Distanz zu dem Retroreflektor durchführbar ist, und
∘ die simulierte Distanz grösser ist als eine tatsächlich strukturell gegebene Entfernung zu dem Retroreflektor.

10. Koordinatenmessgerät (1) nach einem der vorangehenden Ansprüche,
**dadurch gekennzeichnet, dass**
das erste Lager (70) und/oder das zweite Lager (70') als Fest-Los-Lager ausgestaltet sind.

11. Koordinatenmessgerät (1) nach einem der vorangehenden Ansprüche,
**gekennzeichnet durch**
ein Lasermodul (30), insbesondere einen Helium-Neon-Laserofen, zur Erzeugung eines Laserstrahls als Messstrahlung (36), insbesondere wobei das Lasermodul (30) in der Stütze (20) bereitgestellt wird, und ein, insbesondere polarisationserhaltendes, Lichtleitersystem zur Übertragung von Licht zwischen der Stütze (20) und der Strahllenkeinheit (10), insbesondere zum Einkoppeln eines Laserstrahls des Lasermoduls (30) in die optische Distanzmessvorrichtung, insbesondere wobei
• das Lichtleitersystem eine erste Faser (31) und eine zweite Faser (32) aufweist, die durch eine verdrehungssichere Steckerverbindung (33) miteinander verbunden sind, und/oder
• die erste und die zweite Faser (31, 32) Single-Mode-Fasern sind.

12. Verfahren zum Messen von Koordinaten eines entfernten Punktes mittels eines Koordinatenmessgerätes (1), insbesondere einem Koordinatenmessgerät (1) nach einem der vorangehenden Ansprüche, wobei das Koordinatenmessgerät (1) mindestens aufweist
• eine Basis und eine Stütze (20), die um eine erste Drehachse (9) drehbar auf der Basis (40) befestigt ist,
• eine Strahllenkeinheit (10), die um eine zur ersten Drehachse (9) im Wesentlichen orthogonale zweite Drehachse (8) drehbar an der Stütze (20) befestigt ist,
• ein erstes Lager (70) zur drehbaren Lagerung der Strahllenkeinheit (10) an der Stütze (20), und
• ein zweites Lager (70') zur drehbaren Lagerung der Stütze (20) an der Basis (40),
wobei
• die Strahllenkeinheit (10) eine optische Distanzmessvorrichtung aufweist mit mindestens einem Distanzmesser (13, 14) zur Messung der Distanz zum Messhilfsmittel (60) mittels einer Messstrahlung (36),
• das erste Lager (70) einen ersten Winkelencoder (76) aufweist und das zweite Lager (70') einen zweiten Winkelencoder (76') aufweist, und
• an der Basis (40) ein erster Neigungssensor (49) bereitgestellt wird,
und wobei das Verfahren aufweist
• ein Aussenden der Messstrahlung (36) auf den Retroreflektor (61),
• ein Empfangen von dem Retroreflektor (61) reflektierter Messstrahlung,
• ein Ermitteln einer Entfernung zu dem Retroreflektor (61) anhand der reflektierten Messstrahlung,
• ein Ermitteln eines Winkels der Strahllenkeinheit (10) zur Basis (40), und
• ein Erfassen einer Neigung der Basis (40) in mindestens zwei im Wesentlichen orthogonalen Richtungen gegenüber der Richtung der Schwerkraft mittels eines ersten Neigungssensors (49),
**gekennzeichnet durch**
ein Erfassen einer Neigung der Stütze (20) in mindestens zwei im Wesentlichen orthogonalen Richtungen gegenüber der Richtung der Schwerkraft mittels eines zweiten Neigungssensors (29),
wobei das Ermitteln des Winkels der
Strahllenkeinheit (10) zur Basis (40) ein Auswerten der Neigung der Basis (40) und der Neigung der Stütze (20) umfasst.

13. Verfahren nach Anspruch 12,
**gekennzeichnet durch**
eine Messsequenz, im Rahmen derer die Stütze (20) gegenüber der Basis (40) mittels eines ersten Motors (75') um die erste Drehachse (8) gedreht wird, wobei durch die Auswerte- und Steuereinheit (27)
• vor der Messsequenz Neigungsdaten beider Neigungssensoren (29, 49) erfasst und als Initialisierungsneigungsdaten zueinander in Beziehung gesetzt werden; und
• während der Messsequenz Neigungsdaten des zweiten Neigungssensors (49) erfasst und zum Zwecke einer Selbstüberwachung und/oder Selbstkalibrierung des Koordinatenmessgeräts (1) während der Messsequenz mit den Initialisierungsneigungsdaten in Beziehung gesetzt werden.

14. System aus einem Koordinatenmessgerät (1) nach einem der Ansprüche 1 bis 11 und einer Schnellverschlusseinheit zur Befestigung des Koordinatenmessgerätes (1) auf einem Stativ (45),
**gekennzeichnet durch**
mindestens einen Stossdämpfer zum Vermindern von Erschütterungen des Koordinatenmessgerätes (1) bei einem Aufsetzen des Koordinatenmessgerätes (1) auf die Schnellverschlusseinheit, wobei der Stossdämpfer zwischen der Schnellverschlusseinheit und der Basis (40) des Koordinatenmessgerätes (1) wirkt.

15. System nach Anspruch 14, wobei die
Schnellverschlusseinheit eine erste Kontaktfläche (46) aufweist, die Basis (40) eine zweite Kontaktfläche (46') aufweist, und die erste Kontaktfläche (46) und die zweite Kontaktfläche (46') ausgestaltet und angeordnet sind, einander nach dem Aufsetzen vollflächig zu kontaktieren,
**dadurch gekennzeichnet, dass**
der Stossdämpfer ein bewegliches Element zur Impulsaufnahme aufweist, das aus der ersten Kontaktfläche (46) und/oder der zweiten Kontaktfläche (46') herausragt und dazu ausgestaltet ist, nach dem Aufsetzen ein vollflächiges Kontaktieren der ersten Kontaktfläche (46) und der zweiten Kontaktfläche (46') ermöglichen, insbesondere wobei
• das bewegliche Element eine Dämpferkolbenstange (47) ist,
• der Stossdämpfer hydraulisch ist, und/oder
• das System mindestens drei Stossdämpfer aufweist.

## Claims

1. Coordinate measuring device (1), in particular laser tracker, for capturing the position and alignment of a measuring aid (60), which is movable in space and comprises a retroreflector (61), wherein the coordinate measuring device (1) at least comprises
• a base and a support (20), which is fastened on the base (40) so it is rotatable about a first axis of rotation (9),
• a beam deflection unit (10), which is fastened on the support (20) so it is rotatable about a second axis of rotation (8), which is essentially orthogonal to the first axis of rotation (9),
• a first bearing (70) for the rotatable mounting of the beam deflection unit (10) on the support (20), and
• a second bearing (70') for the rotatable mounting of the support (20) on the base (40),
wherein
• the beam deflection unit (10) comprises an optical distance measuring device having at least one distance meter (13, 14) for measuring the distance to the measuring aid (60) by means of measurement radiation (36),
• the first bearing (70) comprises a first angle encoder (76) and the second bearing (70') comprises a second angle encoder (76'), and
• a first inclination sensor (49) is provided on the base (40),
**characterized by**
• a second inclination sensor (29) on the support (20), wherein the first inclination sensor (49) and the second inclination sensor (29) are each embodied
∘ to capture an inclination in at least two essentially orthogonal directions in relation to the direction of gravity and
∘ to output inclination data, and
• an analysis and control unit (27), which is embodied, for the purpose of self-monitoring and/or self-calibration of the coordinate measuring device (1), to capture and analyze the inclination data of the two inclination sensors (29, 49).

2. Coordinate measuring device (1) according to Claim 1,
**characterized by**
a tracking functionality for the progressive tracking of the measuring aid (60), in particular wherein a first position-sensitive surface detector (18) is provided in the beam deflection unit (10).

3. Coordinate measuring device (1) according to any one of Claims 1 or 2,
**characterized in that**
the beam deflection unit (10) comprises
• a measurement camera (12) for capturing the spatial alignment of the measuring aid (60), and/or
• at least one first localization camera (53) for coarse localization of the measuring aid (60).

4. Coordinate measuring device (1) according to any one of the preceding claims,
**characterized by**
a handle (21) as a connecting element of a first and a second spar of the support (20), wherein the handle (21) does not touch the first axis of rotation (9), in particular wherein the handle (21) is bent or has an opening, so that a measurement of the distance to a target along the first axis of rotation (9) is enabled.

5. Coordinate measuring device (1) according to any one of the preceding claims,
**characterized in that**
the first and the second inclination sensors (29, 49) are precision inclination sensors having
• a usage range of ± 1.5 mrad to ± 3.0 mrad,
• a precision of +/- 0.004 mrad to +/- 0.04 mrad, and
• a resolution of 0.0005 mrad to 0.0015 mrad.

6. Coordinate measuring device (1) according to any one of the preceding claims,
**characterized in that**
the analysis and control unit (27) is embodied
• to capture inclination data of the two inclination sensors (29, 49) simultaneously and correlate them with one another, in particular to ascertain differences between simultaneously captured inclination data; and/or
• to capture the data independently of one another and correlate them with one another.

7. Coordinate measuring device (1) according to any one of the preceding claims,
**characterized in that**
the coordinate measuring device (1) is embodied to execute a measurement sequence, in the scope of which the support (20) is rotated in relation to the base (40) by means of a first motor (75') about the first axis of rotation (8), wherein the analysis and control unit (27) is embodied,
• before the measurement sequence, to capture inclination data of the two inclination sensors (29, 49) and to correlate them with one another as initialization inclination data; and
• during the measurement sequence, to capture inclination data of the second inclination sensor (49) and correlate them with the initialization inclination data for the purpose of self-monitoring and/or self-calibration of the coordinate measuring device (1) during the measurement sequence.

8. Coordinate measuring device (1) according to any one of the preceding claims,
**characterized by**
a meteorology station (28) having sensors for ascertaining a temperature, a pressure, and/or a humidity of ambient air, in particular provided in the support (20) or in the base (40), wherein
• the meteorology station (28) is embodied to output the ascertained data as environmental data, and
• the analysis and control unit (27) is also embodied to capture and analyze the environmental data.

9. Coordinate measuring device (1) according to any one of the preceding claims,
**characterized by**
a calibration device (42) for use with a self-calibration functionality, in the scope of which calibration parameters are determinable with respect to a position and/or direction of the measurement radiation (36), wherein analyzed inclination data are also used for the self-calibration functionality, in particular wherein
• the calibration device (42) comprises a second position-sensitive surface detector on the base (40), onto which measurement radiation (36) can be emitted from the beam deflection unit (10), and the analysis and control unit (27) is embodied to determine a point of incidence of measurement radiation (36) incident on the second position-sensitive surface detector,
• the calibration device (42) comprises a retroreflector, which is designed, in a two-dimensional region, independently of the point of incidence of the measurement radiation (36) within the two-dimensional region, to generate an offset-free, coaxial retroreflection of measurement radiation (36) incident thereon, or
• the calibration device (42) comprises, on the base (40), a retroreflector and an optics assembly acting as a reducing objective, and, to determine the calibration parameters for the coordinate measuring device (1), can be targeted using the measurement radiation (36) such that an optical beam path of the measurement radiation (36) extends through the optics assembly and the measurement radiation (36) is incident on the retroreflector, whereby
∘ a first calibration measurement can be carried out using a distance to the retroreflector which is simulated with respect to relevant measured variables for the determination of the calibration parameters, and
∘ the simulated distance is greater than an actual structurally provided distance to the retroreflector.

10. Coordinate measuring device (1) according to any one of the preceding claims,
**characterized in that**
the first bearing (70) and/or the second bearing (70') is/are embodied as fixed/free bearings.

11. Coordinate measuring device (1) according to any one of the preceding claims,
**characterized by**
a laser module (30), in particular a helium-neon laser furnace, for generating a laser beam as measurement radiation (36), in particular wherein the laser module (30) is provided in the support (20) and an in particular polarization-maintaining optical waveguide system for transmitting light between the support (20) and the beam deflection unit (10), in particular for coupling a laser beam of the laser module (30) into the optical distance measuring device, in particular wherein
• the optical waveguide system comprises a first fiber (31) and a second fiber (32), which are connected to one another by a torsion-resistant plug connection (33), and/or
• the first and the second fibers (31, 32) are single-mode fibers.

12. Method for measuring coordinates of a remote point by means of a coordinate measuring device (1), in particular a coordinate measuring device (1) according to any one of the preceding claims, wherein the coordinate measuring device (1) at least comprises
• a base and a support (20), which is fastened on the base (40) so it is rotatable about a first axis of rotation (9),
• a beam deflection unit (10), which is fastened on the support (20) so it is rotatable about a second axis of rotation (8), which is essentially orthogonal to the first axis of rotation (9),
• a first bearing (70) for the rotatable mounting of the beam deflection unit (10) on the support (20), and
• a second bearing (70') for the rotatable mounting of the support (20) on the base (40),
wherein
• the beam deflection unit (10) comprises an optical distance measuring device having at least one distance meter (13, 14) for measuring the distance to the measuring aid (60) by means of measurement radiation (36),
• the first bearing (70) comprises a first angle encoder (76) and the second bearing (70') comprises a second angle encoder (76'), and
• a first inclination sensor (49) is provided on the base (40),
and wherein the method comprises
• an emission of the measurement radiation (36) onto the retroreflector (61),
• a reception of measurement radiation reflected from the retroreflector (61),
• an ascertainment of a distance to the retroreflector (61) on the basis of the reflected measurement radiation,
• an ascertainment of an angle of the beam deflection unit (10) in relation to the base (40), and
• a capture of an inclination of the base (40) in at least two essentially orthogonal directions in relation to the direction of gravity by means of a first inclination sensor (49),
**characterized by**
a capture of an inclination of the support (20) in at least two essentially orthogonal directions in relation to the direction of gravity by means of a second inclination sensor (29),
wherein the ascertainment of the angle of the beam deflection unit (10) in relation to the base (40) comprises an analysis of the inclination of the base (40) and the inclination of the support (20).

13. Method according to Claim 12,
**characterized by**
a measurement sequence, in the scope of which the support (20) is rotated in relation to the base (40) by means of a first motor (75') about the first axis of rotation (8), wherein, by the analysis and control unit (27),
• before the measurement sequence, inclination data of the two inclination sensors (29, 49) are captured and correlated with one another as initialization inclination data; and
• during the measurement sequence, inclination data of the second inclination sensor (49) are captured and correlated with the initialization inclination data for the purpose of self-monitoring and/or self-calibration of the coordinate measuring device (1) during the measurement sequence.

14. System made of a coordinate measuring device (1) according to any one of Claims 1 to 11 and a quick-release fastener unit for fastening the coordinate measuring device (1) on a tripod (45),
**characterized by**
at least one shock absorber for reducing shocks of the coordinate measuring device (1) during a placement of the coordinate measuring device (1) on the quick-release fastener unit, wherein the shock absorber acts between the quick-release fastener unit and the base (40) of the coordinate measuring device (1).

15. System according to Claim 14, wherein the quick-release fastener unit comprises a first contact surface (46), the base (40) has a second contact surface (46'), and the first contact surface (46) and the second contact surface (46') are embodied and arranged to contact one another over the entire surface after the placement,
**characterized in that**
the shock absorber comprises a movable element for momentum absorption, which protrudes out of the first contact surface (46) and/or the second contact surface (46') and is embodied to enable contacting over the entire surface of the first contact surface (46) and the second contact surface (46') after the placement, in particular wherein
• the movable element is a shock absorber piston rod (47),
• the shock absorber is hydraulic, and/or
• the system comprises at least three shock absorbers.

## Revendications

1. Appareil de mesure de coordonnées (1), en particulier laser tracker, pour détecter la position et l'orientation d'un moyen de mesure (60) qui présente un rétroréflecteur (61) mobile dans l'espace, cependant que l'appareil de mesure de coordonnées (1) présente au moins
• une base et un appui (20) qui est fixé sur la base (40) en étant rotatif autour d'un premier axe de rotation (9),
• une unité de guidage du faisceau (10) qui est fixée sur l'appui (20) en étant rotative autour d'un second axe de rotation (8) sensiblement orthogonal au premier axe de rotation (9),
• un premier palier (70) pour le logement rotatif de l'unité de guidage du faisceau (10) sur l'appui (20) et
• un second palier (70') pour le logement rotatif de l'appui (20) sur la base (40) cependant que
• l'unité de guidage du faisceau (10) présente un dispositif de mesure optique de la distance avec au moins un distancemètre (13, 14) pour la mesure de la distance par rapport au moyen de mesure (60) au moyen d'un rayonnement de mesure (36),
• le premier palier (70) présente un premier codeur angulaire (76) et le second palier (70') un second codeur angulaire (76') et
• un premier capteur d'inclinaison (49) est mis à disposition sur la base (40),
**caractérisé par**
• un second capteur d'inclinaison (29) sur l'appui (20), le premier capteur d'inclinaison (49) et le second capteur d'inclinaison (29) étant respectivement configurés
∘ pour la détection d'une inclinaison dans au moins deux directions sensiblement orthogonales par rapport à la direction de la force de gravité et
∘ pour la sortie de données d'inclinaison et
• une unité d'évaluation et de commande (27) qui est configurée dans le but d'une autosurveillance et/ou d'un autocalibrage de l'appareil de mesure de coordonnées (1) pour saisir et évaluer les données d'inclinaison des deux capteurs d'inclinaison (29, 49).

2. Appareil de mesure de coordonnées (1) selon la revendication 1, **caractérisé par** une fonctionnalité de poursuite pour la poursuite continue du moyen de mesure (60), en particulier cependant qu'un premier détecteur de surface sensible à la position (18) est prévu.

3. Appareil de mesure de coordonnées (1) selon l'une des revendications 1 ou 2, **caractérisé en ce que** l'unité de guidage du faisceau (10) présente
• une caméra de mesure (12) pour détecter l'orientation spatiale du moyen de mesure (60) et/ou
• au moins une première caméra de localisation (53) pour la localisation grossière du moyen de mesure (60).

4. Appareil de mesure de coordonnées (1) selon l'une des revendications précédentes, **caractérisé par**
une poignée (21) comme élément de jonction d'un premier et d'un second montant de l'appui (20), cependant que la poignée (21) ne touche pas le premier axe de rotation (9), en particulier cependant que la poignée (21) est recourbée ou présente une ouverture si bien qu'une mesure de la distance à une cible est rendue possible le long du premier axe de rotation (9).

5. Appareil de mesure de coordonnées (1) selon l'une des revendications précédentes, **caractérisé en ce que** le premier et le second capteur d'inclinaison (29, 49) sont des capteurs d'inclinaison de précision avec
• une plage de détection de ± 1,5 mrad à ± 3,0 mrad,
• une exactitude de ± 0,004 mrad à ± 0,04 mrad et
• une résolution de 0,0005 mrad à 0,0015 mrad.

6. Appareil de mesure de coordonnées (1) selon l'une des revendications précédentes, **caractérisé en ce que** l'unité d'évaluation et de commande (27) est configurée pour
• détecter simultanément des données d'inclinaison des deux capteurs d'inclinaison (29, 49) et les mettre en relation les unes avec les autres, en particulier pour déterminer des différences entres des données d'inclinaison détectées simultanément et/ou
• détecter des données d'inclinaison des deux capteurs d'inclinaison indépendamment les unes des autres et les mettre en relation les unes avec les autres.

7. Appareil de mesure de coordonnées (1) selon l'une des revendications précédentes, **caractérisé en ce que** l'appareil de mesure de coordonnées (1) est configuré pour exécuter une séquence de mesures dans le cadre de laquelle l'appui (20) effectue une rotation par rapport à la base (40) autour du premier axe de rotation (8) au moyen d'un premier moteur (75'), cependant que l'unité d'évaluation et de commande (27) est configurée pour
• détecter, avant la séquence de mesure, des données d'inclinaison des deux capteurs d'inclinaison (29, 49) et les mettre en relation les unes avec les autres comme données d'inclinaison d'initialisation et
• détecter, pendant la séquence de mesure, des données d'inclinaison du second capteur d'inclinaison (49) et les mettre en relation avec les données d'inclinaison d'initialisation dans le but d'une autosurveillance et/ou d'un autocalibrage de l'appareil de mesure de coordonnées (1).

8. Appareil de mesure de coordonnées (1) selon l'une des revendications précédentes, **caractérisé par** une station météo (28) avec des capteurs pour déterminer une température, une pression et/ou une humidité de l'air ambiant, en particulier mis à disposition dans l'appui (20) ou dans la base (40), cependant que
• la station météo (28) est configurée pour sortir les données déterminées comme données environnementales et
• l'unité d'évaluation et de commande (27) est également configurée pour saisir et évaluer les données environnementales.

9. Appareil de mesure de coordonnées (1) selon l'une des revendications précédentes, **caractérisé par** un dispositif de calibrage (42) pour l'utilisation avec une fonctionnalité d'autocalibrage dans le cadre de laquelle des paramètres de calibrage peuvent être déterminés par rapport à une position et/ou une direction du rayonnement de mesure (36), cependant que des données d'inclinaison exploitées sont également utilisées pour la fonctionnalité d'autocalibrage, en particulier cependant que
• le dispositif de calibrage (42) présente, sur la base (40), un second détecteur de surface sensible à la position sur lequel un rayonnement de mesure (36) peut être émis par l'unité de guidage du faisceau (10) et l'unité d'évaluation et de commande (27) est configurée pour déterminer un point d'impact du rayonnement de mesure (36) qui impacte le second détecteur de surface sensible à la position (36),
• le dispositif de calibrage (42) présente un rétroréflecteur qui est configuré dans une zone à deux dimensions, indépendamment du point d'impact du rayonnement de mesure (36) à l'intérieur de la zone à deux dimensions, pour produire une rétroréflexion coaxiale sans décalage d'un rayonnement de mesure (36) qui l'impacte ou
• le dispositif de calibrage (42) présente, sur la base (40), un rétroréflecteur et un composant optique qui agit en tant qu'objectif de réduction et qui peut être ciblé avec le rayonnement de mesure (36) pour déterminer les paramètres de calibrage pour l'appareil de mesure de coordonnées (1) de telle manière qu'une marche optique des rayons du rayonnement de mesure (36) passe par le composant optique et que le rayonnement de mesure (36) arrive sur le rétroréflecteur si bien
∘ qu'une première mesure de calibrage peut être réalisée avec une distance par rapport au rétroréflecteur qui est simulée pour ce qui est des variables mesurées pertinentes pour déterminer les paramètres de calibrage et
∘ que la distance simulée est plus grande qu'une distance par rapport au rétroréflecteur qui est donnée effectivement structurellement.

10. Appareil de mesure de coordonnées (1) selon l'une des revendications précédentes, **caractérisé en ce que** le premier palier (70) et/ou le second palier (70') sont configurés comme des paliers fixes et libres.

11. Appareil de mesure de coordonnées (1) selon l'une des revendications précédentes, **caractérisé par** un module laser (30), en particulier un four à laser hélium-néon pour produire un faisceau laser comme rayonnement de mesure (36), in particulier cependant que le module laser (30) est mis à disposition dans l'appui (20), et un système de guides de la lumière, en particulier maintenant la polarisation, pour transmettre la lumière entre l'appui (20) et l'unité de guidage du faisceau (10), en particulier pour injecter un faisceau laser du module laser (30) dans le dispositif optique de mesure de la distance, en particulier cependant que
• le système de guides de la lumière présente une première fibre (31) et une seconde fibre (32) qui sont reliées entre elles par un raccord emboîté résistant à la torsion (33) et/ou
• la première et la seconde fibre (31, 32) sont des fibres monomodes.

12. Procédé pour mesurer des coordonnées d'un point éloigné au moyen d'un appareil de mesure de coordonnées (1), en particulier d'un appareil de mesure de coordonnées (1) selon l'une des revendications précédentes, l'appareil de mesure de coordonnées (1) présentant au moins
• une base et un appui (20) qui est fixé sur la base (40) en étant rotatif autour d'un premier axe de rotation (9),
• une unité de guidage du faisceau (10) qui est fixée sur l'appui (20) en étant rotative autour d'un second axe de rotation (8) sensiblement orthogonal au premier axe de rotation (9),
• un premier palier (70) pour le logement rotatif de l'unité de guidage du faisceau (10) sur l'appui (20) et
• un second palier (70') pour le logement rotatif de l'appui (20) sur la base (40)
cependant que
• l'unité de guidage du faisceau (10) présente un dispositif de mesure optique de la distance avec au moins un distancemètre (13, 14) pour la mesure de la distance par rapport au moyen de mesure (60) au moyen d'un rayonnement de mesure (36),
• le premier palier (70) présente un premier codeur angulaire (76) et le second palier (70') un second codeur angulaire (76') et
• un premier capteur d'inclinaison (49) est mis à disposition sur la base (40) et cependant que le procédé présente
• l'émission d'un rayonnement de mesure (36) sur le rétroréflecteur (61),
• la réception du rayonnement de mesure réfléchi par le rétroréflecteur (61),
• la détermination d'une distance par rapport au rétroréflecteur (61) à l'aide du rayonnement de mesure réfléchi,
• la détermination d'un angle de l'unité de guidage du faisceau (10) par rapport à la base (40) et
• la détection d'une inclinaison de la base (40) dans au moins deux directions sensiblement orthogonales par rapport à la direction de la force de gravité au moyen d'un premier capteur d'inclinaison (49),
**caractérisé par**
la détection d'une inclinaison de l'appui (20) dans au moins deux directions sensiblement orthogonales par rapport à la direction de la force de gravité au moyen d'un second capteur d'inclinaison (29), la détermination de l'angle de l'unité de guidage du faisceau (10) par rapport à la base (40) comprenant une exploitation de l'inclinaison de la base (40) et de l'inclinaison de l'appui (20).

13. Procédé selon la revendication 12, **caractérisé par** une séquence de mesure dans le cadre de laquelle l'appui (20) effectue une rotation par rapport à la base (40) autour du premier axe de rotation (8) au moyen d'un premier moteur (75'), cependant
• qu'avant la séquence de mesure, des données d'inclinaison des deux capteurs d'inclinaison (29, 49) sont saisies et mises en relation les unes avec les autres comme données d'inclinaison d'initialisation par l'unité d'évaluation et de commande (27) et
• que, pendant la séquence de mesure, des données d'inclinaison du second capteur d'inclinaison (49) sont saisies et mises en relation avec les données d'inclinaison d'initialisation dans le but d'une autosurveillance et/ou d'un autocalibrage de l'appareil de mesure de coordonnées (1).

14. Système constitué par un appareil de mesure de coordonnées (1) selon l'une des revendications 1 à 11 et par une unité de fermeture rapide pour la fixation de l'appareil de mesure de coordonnées (1) sur un trépied (45) **caractérisé par** au moins un amortisseur pour réduire les vibrations de l'appareil de mesure de coordonnées (1) lors de la pose de l'appareil de mesure de coordonnées (1) sur l'unité de fermeture rapide, l'amortisseur agissant entre l'unité de fermeture rapide et la base (40) de l'appareil de mesure de coordonnées (1).

15. Système selon la revendication 14, cependant que l'unité de fermeture rapide présente une première surface de contact (46), la base (40) une seconde surface de contact (46') et la première surface de contact (46) et la seconde surface de contact (46') sont configurées et placées pour être contact l'une avec l'autre sur toute la surface après la pose, **caractérisé en ce que** l'amortisseur présente un élément mobile pour recevoir l'impulsion qui fait saillie de la première surface de contact (46) et/ou de la seconde surface de contact (46') et qui est configuré pour permettre, après la pose, une mise en contact sur toute la surface de la première surface de contact (46) et de la seconde surface de contact (46'), en particulier cependant que
• l'élément mobile est une tige de piston d'amortisseur (47),
• l'amortisseur est hydraulique et/ou
• le système présente au moins trois amortisseurs.
